(19) Europäisches Patentamt
European Patent Office
Office européen des brevets

(11) **EP 2 191 397 B1**

(12) **EUROPEAN PATENT SPECIFICATION**

(45) Date of publication and mention
of the grant of the patent:
**23.01.2019 Bulletin 2019/04**

(21) Application number: **08827702.5**

(22) Date of filing: **20.08.2008**

(51) Int Cl.:
***G06F 3/01*** *(2006.01)*

(86) International application number:
**PCT/US2008/073671**

(87) International publication number:
**WO 2009/026337 (26.02.2009 Gazette 2009/09)**

(54) **ENHANCED REJECTION OF OUT-OF-VOCABULARY WORDS**

ERWEITERTE ZURÜCKWEISUNG VON NICHT IN EIN VOKABULAR FALLENDEN WÖRTERN

REJET AMÉLIORÉ DE MOTS HORS VOCABULAIRE

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **20.08.2007   US 956784 P
20.08.2007   US 956776 P**

(43) Date of publication of application:
**02.06.2010   Bulletin 2010/22**

(73) Proprietor: **Qualcomm Incorporated
San Diego, CA 92121 (US)**

(72) Inventors:
• **SHAMAIE, Atid
Ottawa, Ontario K1 V8J3 (CA)**
• **MACDOUGALL, Francis
Ottawa, Ontario K1S 2L7 (CA)**

(74) Representative: **Howe, Steven et al
Reddie & Grose LLP
The White Chapel Building
10 Whitechapel High Street
London E1 8QS (GB)**

(56) References cited:
**US-A1- 2003 208 289        US-A1- 2004 056 907
US-A1- 2004 143 434        US-A1- 2004 193 413
US-A1- 2005 257 174        US-B1- 6 304 674
US-B1- 6 735 566**

• **A-YOUN PARK ET AL: "Gesture Spotting in
Continuous Whole Body Action Sequences
Using Discrete Hidden Markov Models", 1
January 2006 (2006-01-01), GESTURE IN
HUMAN-COMPUTER INTERACTION AND
SIMULATION LECTURE NOTES IN COMPUTER
SCIENCE;LECTURE NOTES IN ARTIFICIAL
INTELLIG ENCE;LNCS, SPRINGER, BERLIN, DE,
PAGE(S) 100 - 111, XP019028370, ISBN:
978-3-540-32624-3 * page 100, lines 18-21 * * page
101, lines 1-9 * * page 104, line 7 - page 110, line 4 ***

## Description

FIELD

The present disclosure generally relates to interactive devices, and at least one particular implementation relates to interacting with mobile devices using a set of defined gestures.

BACKGROUND

Mobile devices, such as cell phones or personal digital assistants (PDAs), have several functions, each of which may be activated through the user selection of a unique sequence of keys or using on-screen menus. As mobile devices get more and more features, accessing all of the features may become increasingly complex given a limited number of controls capable of being provided on a mobile device.

The article "Continuous Whole Body Action Sequences Using Discrete Hidden Markov Models" by A-YOUN PARK ET AL published as 978-3-540-32624-3 in 2006, uses a Hidden Markov Model, comprising a collection of states connected by transitions, which is used to "choose the model that best matches the observations from gesture HMM X", meaning that when a sequence of unknown category is given, the P [(M I $\lambda_C$) for each gesture is calculated and the HMM that has the highest value is chosen. Hence, an initial comparison between an input gesture and each of the training gestures is made to determine the most likely training gesture to correspond to the input gesture. Then, additional garbage models are generated that are able to reject non-gestures.

SUMMARY

According to one general implementation, an input gesture is rejected as being out-of-vocabulary, if the quantity of states of the input gesture does not satisfy a predetermined threshold when compared against the corresponding states of a selected modeled gesture of the vocabulary. Using hidden Markov models, the modeled gesture is selected as the gesture of the vocabulary which is the closest match of the input gesture. Other factors, such as whether the sequence of states of the input gesture matches the corresponding sequence of states of the selected modeled gesture, may be used as a basis for accepting or rejecting the input gesture as being an "in-vocabulary" or "out-of-vocabulary" gesture.

According to another general implementation, a computer-implemented process includes determining, based on applying an input gesture to hidden Markov models collectively modeling a vocabulary of training gestures, a likelihood that the input gesture matches each training gesture, and a quantity of states of the input gesture that match corresponding states of a modeled training gesture determined to have a highest likelihood. The process also includes rejecting the input gesture if the determined quantity does not satisfy a threshold.

Implementations may include one or more of the following features. For example, the input gesture may be recognized if the determined quantity satisfies the threshold, and an application may be controlled based on the recognized input gesture. An input command associated with the modeled training gesture determined to have the highest likelihood may be determined if the determined quantity satisfies the threshold quantity. A second quantity of states of the rejected input gesture that match corresponding states of a second modeled training gesture determined to have a second highest likelihood may be determined, the rejected input gesture may be rejected if the determined second quantity fails to satisfy the threshold. Observation symbols defining the input gesture may be applied to the Hidden Markov Models. The input gesture may be rejected if a sequence of the states of the input gesture does not match a sequence of the corresponding states of the modeled training gesture determined to have the highest likelihood.

In further examples, the input gesture may be rejected if a first or last state of the input gesture does not match a first or last of the corresponding states of the modeled training gesture determined to have the highest likelihood, respectively. The likelihood and a sequence of state changes may be determined using the Viterbi algorithm. If the determined quantity fails to satisfy the threshold, the input gesture may be rejected as being outside of the vocabulary. The hidden Markov models may be trained to recognize the vocabulary of training gestures. A set of state changes associated with the input gesture may be extracted, where the quantity of states of the input gesture may be determined from the extracted set of state changes.

In other examples, determining the quantity of states of the input gesture that match corresponding states of the modeled training gesture determined to have the highest likelihood may further include determining the quantity of states for which an extracted median for the input gesture in each state is greater than or equal to a minimum of extracted medians in a corresponding state for a set of training samples of the modeled training gesture determined to have the highest likelihood, or determining the quantity of states for which an extracted median for the input gesture in each state is greater or equal, by a non-zero adjustment parameter $\varepsilon$, to a minimum of extracted medians in a corresponding state for a set of training samples of the modeled training gesture determined to have the highest likelihood. The threshold may be expressed as a quantity of the corresponding states. The input gesture may be normalized.

According to another general implementation, a device includes a processor configured to determine, based on applying an input gesture to hidden Markov models collectively modeling a vocabulary of training gestures, a likelihood that the input gesture matches each training gesture, and a quantity of states of the input gesture that match corresponding states of a modeled training gesture determined to have a highest likelihood. The processor is also configured to reject the input gesture if the determined quantity fails to satisfy a threshold. In example implementations, the device may also include an input module configured to receive the input gesture, where the input module may be an interactive screen comprising a camera.

According to another general implementation, a computer-readable medium encoded with a computer program includes instructions that, when executed, operate to cause a computer to perform operations including determining, based on applying an input gesture to hidden Markov models collectively modeling a vocabulary of training gestures a likelihood that the input gesture matches each training gesture, and a quantity of states of the input gesture that match corresponding states of a modeled training gesture determined to have a highest likelihood. The operations also include rejecting the input gesture if the determined quantity fails to satisfy a threshold.

According to another general implementation, and instead of selecting a control on a mobile device, a user may move the mobile device through a series of motions that define a gesture, in order to invoke certain functionality on the mobile device that is associated with that gesture. In doing so, functions may be implemented without requiring the use of physical buttons or user interface controls, allowing mobile devices to be made smaller and effecting increased accuracy in functionality selection.

According to another general implementation, a computer-implemented process includes sensing motion of a device using image data, and recognizing a gesture corresponding to the sensed motion of the device. The process also includes determining functionality of the device corresponding to the recognized gesture, and invoking the functionality.

Implementations may include one or more of the following features. For example, the motion may include a first motion in a first trajectory, and a second motion in a second, different trajectory. Recognizing the gesture may further include recognizing a character shape, geometric shape or pattern defined by the sensed motion of the device. Sensing the motion of the device may further include detecting a subconscious body movement of a user of the device, and the invoked functionality may be associated with the subconscious body movement. The process may also include detecting first and second user inputs at first and second times, respectively, where sensing the motion of the device further comprise sensing motion of the device occurring between the first and second times.

In further examples, the first input may be a shaking user input, a control selection user input, or a held-static user input. Recognizing the gesture may further include selecting the gesture based on comparing the sensed motion to a modeled vocabulary of gestures. The process may also include normalizing the sensed motion of the device, comparing the normalized, sensed motion to the modeled vocabulary of gestures, and determining a parameter based on comparing the sensed motion to the normalized motion. The functionality may be determined based on the parameter. The parameter may be input to the invoked functionality.

In additional examples, the vocabulary of gestures may be modeled using any number of Hidden Markov Models (HMM) or rule-based models. The process may further include selectively activating fewer than all available gestures in the vocabulary of gestures, where the gesture may be selected based on comparing the sensed motion to the activated gestures. The fewer than all of the available gestures may be enabled based on a manufacturer setting, a user setting or an application setting. The process may also include training the device to recognize a particular gesture, and adding the particular gesture to the vocabulary of gestures. Invoking the functionality may further include executing an application, manipulating an image, or inputting a character.

In other examples, sensing motion of the device may include detecting first and second user inputs at first and second times, respectively, the first time occurring before the second time, sensing a first motion in a first trajectory before the first time, sensing a second motion in a second, different trajectory after the second time, joining the first and second motions, and outputting the joined first and second motions as the sensed motion. Invoking the functionality may further include navigating in a virtual environment, manipulating an image, entering a character, executing an application, or invoking media hub functionality.

According to another general implementation, a device includes a sensor and a processor. The sensor is configured to sense motion. The processor is configured to recognize a gesture corresponding to the sensed motion sensed by the sensor, to determine functionality corresponding to the recognized gesture, and to invoke the functionality. In example implementations, the sensor may be a camera, and the motion may be sensed using optical flow.

According to another general implementation, a computer-readable medium is encoded with a computer program. The computer program includes instructions that, when executed, operate to cause a computer to perform operations including sensing motion of a device using image data, recognizing a gesture corresponding to the sensed motion of the device, determining functionality of the device corresponding to the recognized gesture, and invoking the functionality.

EP 2 191 397 B1

Implementations of any of the techniques described above may include a method, a process, a system, a device, an apparatus, an interaction interface, instructions stored on a computer-readable medium, or a computer-readable medium encoded with a computer program. The details of one or more implementations are set forth in the accompanying drawings and the description below. Other features will be apparent from the description and drawings, and from the claims.

BRIEF DESCRIPTION OF THE DRAWINGS

FIG. 1 is a contextual diagram demonstrating gesture recognition and rejection.

FIG. 2 is a block diagram of a device.

FIG. 3 demonstrates invocation of device functionality in response to gesture recognition.

FIG. 4 demonstrates gesture combinations.

FIG. 5 illustrates gesture normalization.

FIG. 6 illustrates gesture training.

FIG. 7 illustrates subconscious gestures.

FIG. 8 illustrates an example gesture vocabulary.

FIG. 9 is a flowchart of an exemplary process.

FIG. 10 illustrates an environment for gesture training.

FIG. 11 illustrates an environment for gesture configuration.

FIG. 12 illustrates a user interface for selective gesture activation.

FIG. 13 is a flowchart of an exemplary process.

FIG. 14 illustrates example gestures.

FIG. 15 illustrates various approaches for recognizing gestures.

FIG. 16 illustrates exemplary computing devices.

Like reference numbers represent corresponding parts throughout.

DETAILED DESCRIPTION

According to one general implementation, an input gesture is rejected as being out-of-vocabulary, if the quantity of states of the input gesture does not satisfy a predetermined threshold when compared against the corresponding states of a selected modeled gesture of the vocabulary. Using hidden Markov models, the modeled gesture is selected as the gesture of the vocabulary which is the closest match of the input gesture. Other factors, such as whether the sequence of states of the input gesture matches the corresponding sequence of states of the selected modeled gesture, may be used as a basis for accepting or rejecting the input gesture as being an "in-vocabulary" or "out-of-vocabulary" gesture.

Thus, and instead of selecting a control on a mobile device or on a user interface, a user may move through a series of motions that define a gesture (e.g., move their hand or other body part, or move a mobile device), in order to invoke certain functionality that is associated with that gesture. In doing so, functions may be implemented without requiring the use of physical buttons or user interface controls, allowing smaller mobile devices, smaller user interfaces and effecting increased accuracy in functionality selection.

4

In one example, a user interacts with a device, such as a mobile device, by performing a set of defined gestures. Because mobile devices may be small and held in a hand of a person, the user may perform a gesture while holding a mobile device. A user may gesture using approaches other than moving a mobile device, such as writing with their hand or a stylus on a touch screen or tablet computer. An enhanced approach is provided, in which an input gesture is applied to hidden Markov models collectively modeling a vocabulary of training gestures, and in which the input gesture is either recognized or rejected based on whether a determined likelihood and/or a determined quantity of matched states satisfies a threshold.

As used herein throughout, a "gesture" is intended to refer to a form of non-verbal communication made with part of a human body, and is contrasted with verbal communication such as speech. For instance, a gesture may be defined by a movement, change or transformation between a first position, pose, or expression and a second pose, position or expression. Common gestures used in everyday discourse include for instance, an "air quote" gesture, a bowing gesture, a curtsey, a cheek-kiss, a finger or hand motion, a genuflection, a head bobble or movement, a high-five, a nod, a sad face, a raised fist, a salute, a thumbs-up motion, a pinching gesture, a hand or body twisting gesture, or a finger pointing gesture. A gesture may be detected using a camera, such as by analyzing an image of a user, using a tilt sensor, such as by detecting an angle that a user is holding or tilting a device, sensing motion of a device, or by any other approach. Gestures may be formed by performing a series of motions in a particular pattern or fashion.

A user may make a gesture (i.e. may "gesture" or "gesticulate") by changing a position of a body part (i.e. a waving motion), or a user may gesticulate without changing a position of a body part (i.e. by making a clenched fist gesture, or by holding a body part immobile for a period of time). Although the enhanced approach uses, as examples, hand, arm or finger gestures, other types of gestures may also be used.

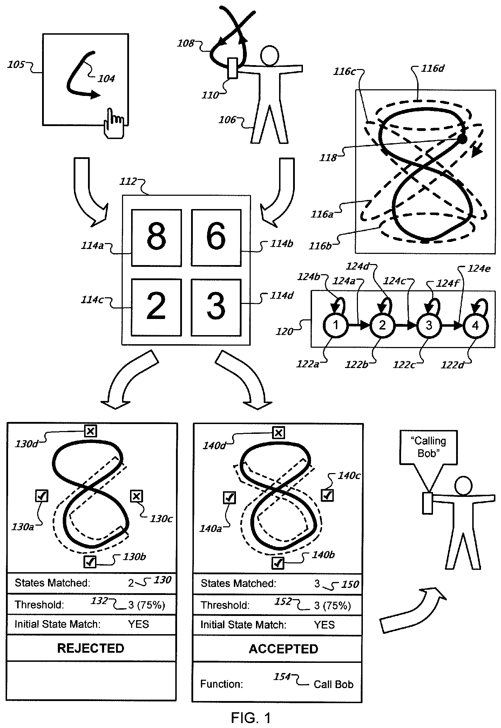

FIG. 1 is a contextual diagram demonstrating gesture recognition and rejection. A first input gesture 104 may be made, such as by drawing with a finger or stylus on a tablet computer 105. As another example of gesture input, a user 106 creates a second input gesture 108 in the air by moving a device 110 through a particular pattern. The device 110, which may be a mobile phone, audio player, a timepiece, or other device, may sense the motion of the device 110 (e.g., using a sensor). The first input gesture 104 and the second input gesture 108 may be represented as input gesture patterns, for example as a set of observation symbols for input to a hidden Markov model, or as dots, pixels or points on a grid, which indicate two-dimensional or three-dimensional locations in space that the gesture crosses. Other approaches may be used for gesture representation, such as representing gestures as a collection of vectors, or as a set of movement directives (e.g., "move right horizontally", then "move up and to the left").

The input gesture patterns associated with the first and second input gestures 104 and 108 may be compared to a vocabulary 112 of modeled training gestures. For example, the vocabulary 112 includes training gestures 114a-d, corresponding to the numbers 8, 6, 2, and 3, respectively.

A temporal sequence such as a sequence of gesture movements may be recognized using a number of hidden Markov models (HMMs). Using HMMs for recognition purposes includes having a set of HMMs (e.g., as many as the number of gestures in the vocabulary 112) and training them with a set of training samples of these gestures. For a given input gesture, trained models can be employed to produce a likelihood that the given input gesture is one of the trained gestures in the vocabulary.

A training gesture, such as the training gesture 114a, may be divided into one or more gesture portions or states. For example, the number "8" may be represented as a first gesture portion 116a, corresponding to the portion of an "8" starting from an upper-right starting point 118 down to the lower-left of the "8", followed by a second gesture portion 116b, corresponding to the bottom portion of an "8", followed by a third gesture portion 116c, corresponding to the lower-right to upper-left portion of an "8", followed by a fourth gesture portion 116d, corresponding to the top portion of an "8".

Gesture portions may correspond to gesture states. A hidden Markov model may include a set of states and state transitions. Gesture states can be illustrated using a topology 120, which in this example includes states 122a-d, which correspond to the gesture portions 116a-d, respectively.

The topology 120 illustrates state transition. For example, the first state 122a may be entered when the gesture portion 116a is performed. The second state 122b may be entered when the gesture portion 116b is performed, as indicated by arrow 124a.

Using a set of hidden Markov models collectively modeling the vocabulary 112, a likelihood can be determined, for each training gesture 114a-d, which indicates the likelihood that an input gesture (e.g., gestures 104, 108) matches a particular training gesture 114a-d. For the training gesture with the highest determined likelihood, a quantity of matched states can be determined. The quantity of matched states can indicate the quantity of states of the input gesture that match corresponding states of the modeled training gesture determined to have a high (or the highest) likelihood.

For example, a likelihood can be determined for each of the training gestures 114a-d indicating the likelihood that the respective training gesture matches the input gesture 104. In this example, the training gesture 114a (e.g., the number "8") has the highest determined likelihood. An indicator 130a indicates that the first input gesture 104 matches the first state 122a of the training gesture 114a, an indicator 130b indicates that the first input gesture 104 matches the second state 122b of the training gesture 114a, an indicator 130c indicates that the first input gesture 104 does not match the third state 122c of the training gesture 114a, and an indicator 130d indicates that the first input gesture 104 does not match the fourth state 122d of the training gesture 114a.

A quantity 130 can be determined (e.g., "2" in this example), indicating the number of states of the input gesture 104 that match corresponding states of the training gesture 114a. The determined quantity 130 can be compared to a threshold 132, and the input gesture 104 can be rejected (e.g., rejected as being outside of the vocabulary 112) if the determined quantity 130 does not satisfy the threshold 132. As shown in this example, the first input gesture 104 matches two states of the training gesture 114a, which does not satisfy the threshold 132, resulting in the rejection of the input gesture 104 as being out-of-vocabulary.

A likelihood can also be determined for each of the training gestures 114a-d indicating the likelihood that the respective training gesture matches the input gesture 108. In this example, the training gesture 114a again has the highest determined likelihood. Indicators 140a-c indicate that the second input gesture 108 matches the first three states 122a-c of the training gesture 114a. An indicator 140d indicates that the second input gesture 108 does not match the fourth state 122d of the training gesture 114a.

A quantity 150 can be determined (e.g., "3" in this example), indicating the number of states of the input gesture 108 that match corresponding states of the training gesture 114a. The determined quantity 150 can be compared to a threshold 152, and the input gesture 108 can be accepted if the determined quantity 150 satisfies the threshold 152. As shown in this example, the input gesture 108 matches three states of the training gesture 114a, which satisfies the threshold 152, resulting in the acceptance (i.e., recognition) of the input gesture 108, as an in-vocabulary gesture.

An application can be controlled in response to a recognized gesture. For example, in response to the recognition of the input gesture 108 as a match of the training gesture 114a, a table or other data structure can be accessed to determine a function or command to invoke. For example, it can be determined (e.g. using a look-up table) that a "Call Bob" function 154 is mapped to the training gesture 114a, and the function 154 can be invoked in response to recognizing the input gesture 108 as an acceptable match of the training gesture 114a.

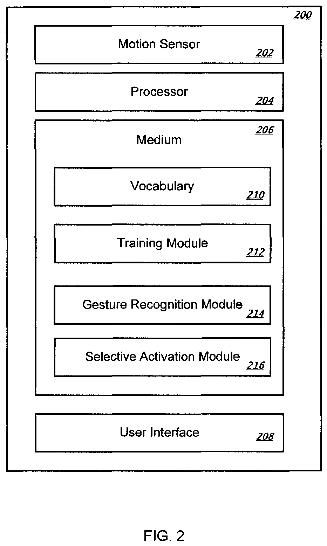

FIG. 2 is a block diagram of a device 200. The device 200 may be a mobile telephone, and/or may be or include a component of a personal computer (PC) or gaming system, a laptop, a handheld or tablet computer, a personal data assistant ("PDA") or another type of embedded system such as a computer keyboard or a remote control. The device 200 also may be an iPod device or other portable music player, a beeper or other communication device, or a handheld or portable electronic device for gaming, communications, time-keeping, and/or data organization. In some implementations, the device 200 is attached to or worn on the user's body. The device 200 includes a motion sensor 202, a processor 204, a medium 206 and a user interface 208.

The motion sensor 202 may detect when the device 200 is moved and may detect the direction and magnitude of movements. The motion sensor 202 may be any type of component or apparatus configured to detect or sense motion or position of the device 200. For example, the motion sensor 202 may be one or more cameras, one or more gyroscopes, one or more GPS (global positioning system) trackers, or a combination of these devices. The motion sensor 202 may be located on the exterior or interior of the device 200 in a variety of positions and orientations.

The processor 204 may accept input from the user interface 208 and may analyze data captured by the motion sensor 202. The processor may execute application programs and operating systems being run on the device 200. The device 200 may include multiple processors (or other control circuitry) and may include memory (or other computer-readable storage media) that stores application programs, operating systems, user input programs, and data used by the application programs, operating systems, and user input programs.

The medium 206 stores and records information or data, and may be an optical storage medium, magnetic storage medium, flash memory, or any other storage medium type. The medium 206 includes a vocabulary 210, a training module 212, a gesture recognition module 214, and a selective activation module 216.

The vocabulary 210 includes information regarding gestures that the device 200 may recognize. For example, the vocabulary 210 may include gesture definitions which describe, for each recognized gesture, a set of trajectories or movements included in a gesture. In other examples, gesture definitions included in the vocabulary 210 may include gesture movement boundaries and/or sets of points which define gesture movement patterns. Gesture definitions may also include information used to define hidden Markov models.

The training module 212 allows a user to customize gestures. For example, a user may repeatedly perform a gesture using a training interface to define the boundaries of a gesture. The training interface may also allow the user to manually size or stretch the boundary of a gesture.

The gesture recognition module 214 receives motion data from the motion sensor 202 and compares the received motion data to motion data stored in the vocabulary 210 to determine whether a recognizable gesture has been performed. For example, the gesture recognition module can use hidden Markov models to compare a determined quantity of matched states to an acceptance threshold.

The selective activation module 216 is used to selectively activate and deactivate gestures in the vocabulary 210. Gestures may be activated and deactivated on a per-user, per-application and/or per-device basis. For example, for an application which uses significant text entry (e.g., an email editor), a "2" character gesture and a "Z" character gesture may both be activated. For an application that has little or no text entry and a relatively small number of commands, one of the "2" or "Z" character gestures may be activated, but not both, since gesture recognition may be more efficient or accurate if similarly shaped gestures are not simultaneously active.

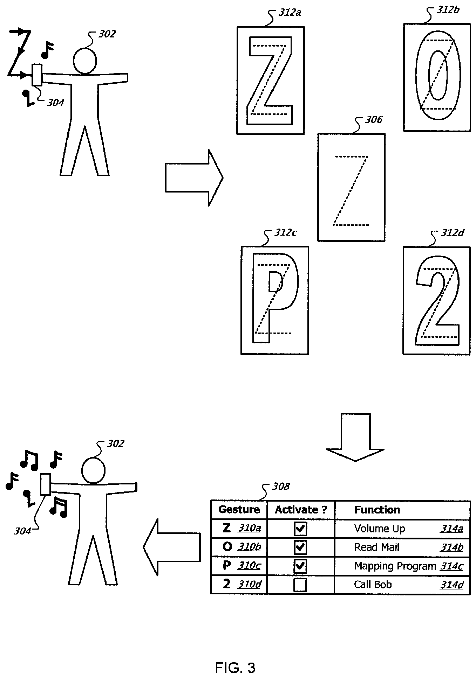

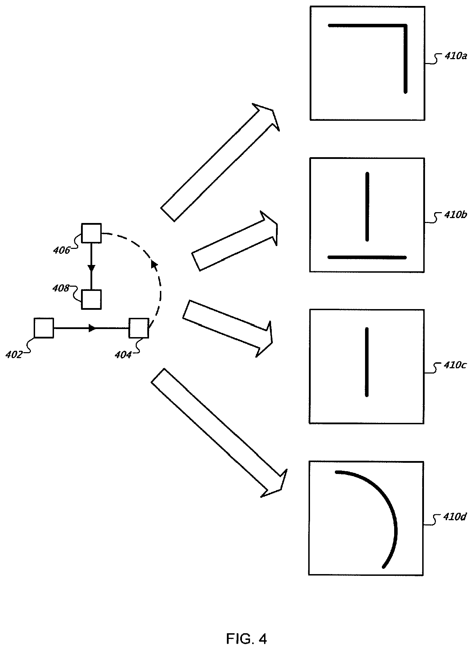

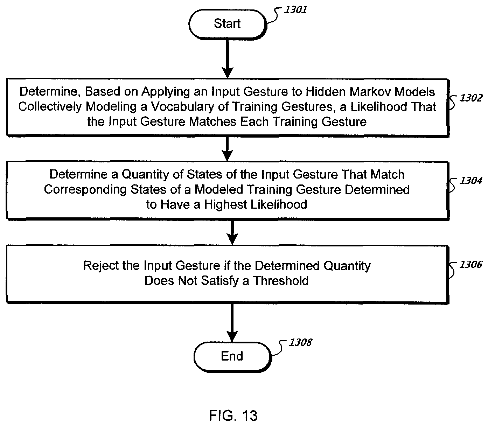

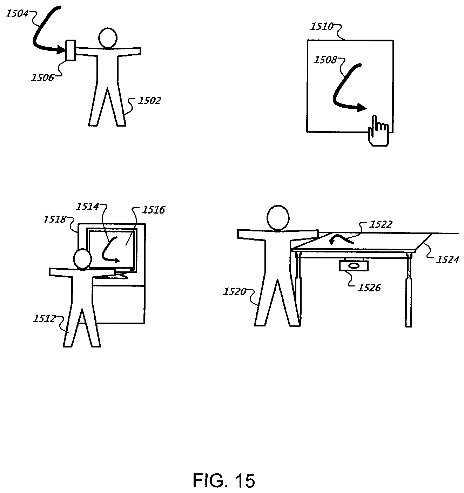

FIGS. 3 to 12 provide exemplary processes and devices for entering gestures, which may be accepted or rejected based on the exemplary process described in FIG. 13. Other approaches for entering gestures, such as using the devices described in FIG. 15, may also be used as well by the process described above and in FIG. 13.

For example, FIG. 3 demonstrates invocation of device functionality in response to gesture recognition. A user 302 creates a Z-shaped gesture in the air with a device 304 (i.e., the user 302 moves the device 304 in a rightward (from the reader's perspective) direction, then in a downward-and-leftward direction, and then in a second rightward direction generally parallel to the first rightward direction). Music or other audio is playing on the device 304. The device 304, which may be a mobile phone, audio player, or other device, may sense the motion of the user 302 (e.g., using a sensor), recognize a gesture corresponding to the sensed motion, determine functionality corresponding to the recognized gesture, and invoke the determined functionality.

For example, the device 304 may represent the movements of the user 302 as an input gesture pattern 306 shown here as a series of dots. The input gesture pattern 306 may be compared to gesture definitions included in a vocabulary stored on the device 304. For example, a table 308 illustrates a vocabulary that includes gesture definitions for gestures 310a-d, representing the characters "Z", "O", "P", and "2", respectively. Fewer or more gesture definitions may also be defined.

A vocabulary may include boundaries, such as boundaries 312a-d, which are included in or otherwise associated with gesture definitions. For example, the "Z" character gesture 310a may be associated with the boundary 312a, the "O" character gesture 310b may be associated with the boundary 312b, the "P" character gesture 310c may be associated with the boundary 312c, and the "2" character gesture 310d may be associated with the boundary 312d. Boundaries (or templates) may define a normalized or standardized version of gesture, such that motions performed by the user are compared against the boundaries to determine whether a particular gesture is performed.

Although the boundaries are illustrated as visual boundaries, each gesture may be represented as a set of acceptable vectors, motions, or accelerations that define the gesture, or hidden Markov models defining the gesture. Moreover, the gesture definitions may require that certain motions occur in certain directions, or require that motions that make up a gesture occur in a particular sequence.

An inputted gesture pattern performed by the user may be compared to each of a vocabulary's gesture definitions, to determine if the inputted gesture pattern may be included within the boundary of one or more vocabulary gestures. For example, the input gesture pattern 306 (i.e., the "Z"-shaped pattern) may be compared to each of the boundaries 312a-d. The input gesture pattern 306 does not fit inside the "O" shape of the boundary 312b or inside the "P" shape of the boundary 312c. However, the input gesture pattern 306 may fit inside the "Z" shape of the boundary 312a and inside the "2" shape of the boundary 312d. The gestures 310a and 310d, therefore, are identified as candidate gestures. Furthermore, the comparison may occur by applying the input gesture pattern to one or more hidden Markov models.

Since a performed gesture may be expected to fall into more than one boundary or definition, certain gestures in the vocabulary may be disabled (or deactivated) by a user or an application, to reduce computational expense in resolving conflicts and to increase accuracy. Thus, a vocabulary gesture may be either active or inactive. For example, the table 308 shows that the "Z" character gesture 310a, the "O" character gesture 310b, and the "P" character gesture 310c are active, while the "2" character gesture 310d is inactive.

Gestures may be activated or deactivated on a per-device or per-application basis, and may be activated and deactivated by an end user, by a manufacturer and/or by an application developer. For efficiency of gesture recognition, one gesture in a set of similar gestures may be active while the other gestures in the set are inactive. For example, the "2" and "Z" characters are similar in shape, so only one of the associated gestures are active. Since only one of the candidate gestures 310a and 310d is active in this example, the "Z" character gesture 310a is recognized in response to the movement of the user 302.

Device functions may be mapped to gestures, such that if a gesture is recognized, mapped functionality is invoked in response to the performance of the gesture. For example, the table 308 indicates that a "volume up" function 314a is mapped to the "Z" character gesture 310a, a "read mail" function 314b is mapped to the "O" character gesture 310b, a "mapping program" function 314c is mapped to the "P" character gesture 310c, and a "call specific person" function 314d (e.g., call "Bob") is mapped to the "2" character gesture 310d. In response to the recognition of the active "Z" character gesture, the "volume up" function is identified and invoked, resulting in an increase of the volume of the audio playing on the device 304.

As mentioned above, gestures may be recognized if an inputted gesture pattern lies inside of a boundary defined by a vocabulary gesture definition. Other approaches may be used to recognize gestures. For example, a vocabulary gesture may be defined as a set of one or more directional descriptions of movements. For example, the "Z" character gesture 310a may be represented (i.e., described) as "move right horizontally", "move downward and leftward", "move right horizontally, parallel to the first movement". If the movements of an inputted gesture match the movements defined by a vocabulary gesture definition, the inputted gesture may be recognized. As another example of gesture recognition, a vocabulary gesture may be defined as occupying a set of points on a grid, and an inputted gesture may be recognized if the movements of the inputted gesture "cross" the same points (or a certain percentage of points).

When performing a gesture using a device, a user may, in some situations, be physically prevented from completing a gesture, such as if a wall, desk, another person, or some other physical object blocks the path of the user's movement. The user may stop or pause a partially-completed gesture midway, reposition the device (e.g., by repositioning an arm), and restart movement of the device in order to complete the gesture.

A user may indicate that they wish to start a gesture by performing an action, such as pushing a button on the device, shaking the device, or holding the device static for a brief time period (e.g., one second). As shown in FIG. 3, as a first movement of a gesture, the user may move a device rightward from a first position 402 to a second position 404. The user may desire to move downward to continue the gesture but may be physically prevented from doing so. The user may perform an action, such as shaking the device, holding the device static, or pushing a button on the device, to indicate that the current gesture is to be paused. While the device is in a paused state, the user may reposition the device, moving it from the position 404 to a position 406. The user may perform an action, such as shaking the device, holding the device static, or pushing a button on the device, to indicate that the gesture is to be resumed. The user may complete the gesture by moving the device downward from the position 406 to a position 408.

Gesture representations 410a-d illustrate possible gestures that may be recognized from the movements of the device between positions 402 and 408. A gesture representation 410a illustrates the joining of the horizontal and vertical movements into a continuous gesture, as described above. A representation 410b illustrates a recognition of two disconnected gestures. A representation 410c illustrates the recognition of only the second, vertical gesture, such as if only a last gesture was accepted or recognized, and previous gestures (such as the first, horizontal gesture) were erased, filtered-out, or otherwise ignored. A representation 410d illustrates the recognition of the arc movement from the position 404 to the position 406, such as if the gesture start boundary began at the position 404 and the gesture stop boundary ended at the position 406. The user or application may determine which of these representations is the desired representation.

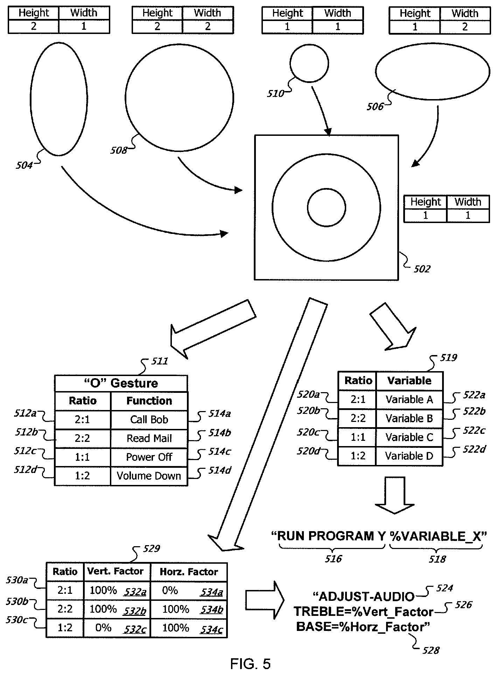

FIG. 5 illustrates gesture normalization. A gesture definition may include a height-to-width ratio that may be used for shape normalization. For example, for a gesture shaped like an "O" character, a 1 to 1 (i.e., 1:1) height-to-width ratio may be stored to define a normal "O" shape that is a perfect circle, or another ratio, such as 1.2:1, may be stored to define a normal "O" shape that is slightly taller than it is wide.

When a gesture is recognized, the height and width of the detected gesture may be determined, and a height-to-width ratio of the detected gesture may be calculated and compared to the height-to-width ratio stored in the gesture definition. If the calculated ratio is different from the ratio stored in the gesture definition, the detected gesture may be scaled or normalized to the ratio stored in the gesture definition.

For example, an "O" shape 502 defines the acceptable boundaries for an "O" shaped gesture. The "O" shape 502 has a normalized height-to-width ratio of 1:1. A user may perform an "O" shaped gesture which is not in a 1:1 ratio, such as a "tall, skinny O" shape 504 which has a 2:1 height-to-width ratio, a "short, fat O" shape 506 which has a 1:2 height-to-width ratio, or a "large O" shape 508 which has a 2:2 height-to-width ratio. A user may perform an "O" shaped gesture which does have a 1:1 ratio, such as a small "O" shape 510. Regardless of the shape, if an "O" shaped gesture such as one of the shapes 504-510 is recognized, a detected height-to-width ratio may be compared to the height-to-width ratio of the normalized shape 502, and the detected gesture may be scaled if the compared ratios are different.

The amount of scaling used to normalize a gesture may be used to determine a function to be invoked. For example, as illustrated by table 511, if a gesture is recognized which has a 2:1 ratio 512a (e.g., as compared to a normal gesture), a "call Bob" function 514a may be invoked. A 2:1 ratio compared to a 1:1 ratio may result in 50% vertical scaling and 0% horizontal scaling. As another example, recognition of the performance of a gesture having a 2:2 ratio 512b (resulting in 50% vertical scaling and 50% horizontal scaling) may result in the invocation of a "read mail" function 514b. The 2:2 ratio 512b represents a motion with dimensions of 2 distance units high by 2 distance units wide, which, when scaled with 50% vertical scaling and 50% horizontal scaling, would result in a movement or gesture with a 1:1 ratio (*i.e.* 1 distance unit high by 1 distance unit wide).

Continuing the example, recognition of the performance of a gesture having a 1:1 ratio 512c (i.e., no scaling) may result in the invocation of a "power off" function 514c. As a final example, recognition of the performance of a gesture having a 1:2 ratio 512d (resulting in 50% horizontal scaling and 0% vertical scaling) may result in the invocation of a "volume down" function 514d.

A scaling amount or ratio may also be used as an input parameter to a function to be invoked. For example, a device may be configured such that if an "O" gesture is recognized, a particular function, such as "RUN PROGRAM Y" 516 may be invoked. A function, (e.g. the "RUN PROGRAM Y" function 516) may accept one or more parameters which may be used as inputs by the function. In this example, one parameter 518 named "VARIABLE_X" is used as an input to the function 516.

The value of the parameter 518 may be determined by a detected ratio of a recognized gesture. For example, as illustrated by table 519, if a gesture with a 2:1 ratio 520a is recognized, the parameter 518 may take on a "VARIABLE A" 522a value. As another example, if a gesture with a 2:2 ratio 520b is recognized, the parameter 518 may take on a "VARIABLE B" 522b value. Continuing the example, if a gesture with a 1:1 ratio 520c is recognized, the parameter 518 may take on a "VARIABLE C" 522c value. As a final example, if a gesture with a 1:2 ratio 520d is recognized, the parameter 518 may take on a "VARIABLE D" 522d value. In summary, a gesture may be configured such that a particular function is performed in response to the performance of the gesture, while parameter values (e.g., input values) provided to the invoked function may be determined by a detected height-to-width ratio of the performed gesture.

More than one parameter value may be determined based on characteristics of an inputted gesture. For example, a gesture may be configured such that an ADJUST-AUDIO function 524 is invoked in response to the performance of the gesture. The ADJUST-AUDIO function 524 may accept a parameter 526, which may be used to affect the adjustment of a treble audio setting, and a parameter 528, which may be used to affect the adjustment of a base audio setting.

The values of the parameters 526 and 528 may be determined by a detected height-to-width ratio of an inputted gesture. For example, as illustrated by table 529, if a gesture with a 2:1 ratio 530a is detected, a value of "100%" 532a may be used as the value of the parameter 526, and a value of "0%" 534a may be used as the value of the parameter 528. Put another way, if the detected input gesture is twice as high as the normal gesture, an interpretation may be that a treble setting may be increased by 100% (i.e., doubled), and if the detected input gesture is the same width as the normal gesture, a base setting may remain unaffected (i.e., increased by 0%).

As another example, if a gesture with a 2:2 ratio 530b is detected, a value of "100%" 532b may be used as the value of the parameter 526, and a value of "100%" 534b may be used as value of the parameter 528 (i.e., if an inputted gesture is twice as tall and twice as wide as the normal gesture, both a treble and a base setting should be doubled (increased by 100%)). As a final example, if a gesture with a 1:2 ratio 530c is detected, a value of "0%" 532c may be used as the value of the parameter 526 (indicating no change to a treble setting), and a value of "100%" 534c may be used as the value of the parameter 528 (indicating that a base setting should be doubled).

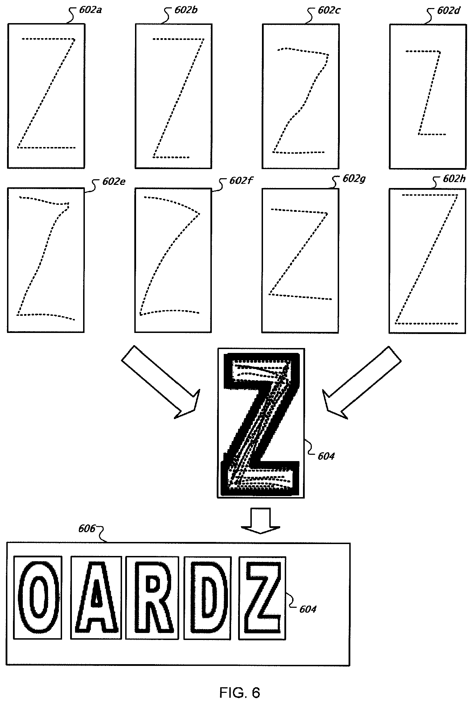

FIG. 6 illustrates gesture training. Gesture representations 602a-h represent various training gesture inputs provided by one or more user's repeatedly performing a "Z" shaped gesture. The gesture representations 602a-h are each shown as a set of dots representing a user's movement while performing a respective gesture. The gesture representations 602a-h are overlaid onto each other to form the boundaries of a Z character shape 604 (i.e., once the Z character shape 604 is defined, if a user's movements fall within the boundaries of the Z character shape 604, then a Z character gesture may be recognized). In a similar manner, gesture training may be used to generate hidden Markov models.

A device may include a pre-existing vocabulary 606 which includes a set of defined gestures. The Z character shape 604 may be inserted into the pre-existing vocabulary 606 so that subsequent Z-shaped gestures performed by a user may be recognized. Gestures may be defined by a manufacturer and/or by a user. A manufacturer may use one or more test users to train a device, resulting in the formation of recognizable boundaries of characters or other shapes that are included in a pre-defined vocabulary of a device. A user may add custom gestures to a vocabulary of a device, training the device to recognize user-specific movements used when performing a gesture.

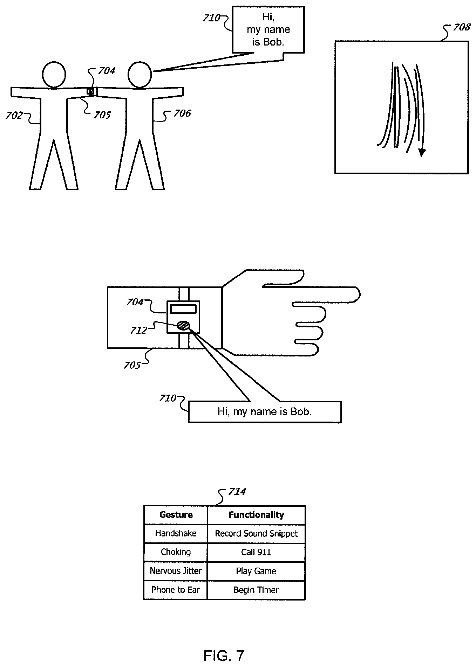

FIG. 7 illustrates subconscious gestures. For example, a user 702 wearing a wrist-watch device 704 shakes the hand of a person "Bob" 706. The wrist-watch device 704 recognizes a handshake gesture 708, defined as a set of up-and-down movements spaced tightly together. In response to the recognition of the handshake gesture 708, the wrist-watch device 704 initiates a sound recorder to record audio for a brief period (e.g., two seconds) after detection of the handshake gesture 708. For example, the wrist-watch device 704 may record the sound snippet "Hi, my name is Bob" 710 spoken by the person Bob 706. At a later time, the user 702 may play back the recorded audio, such as through a speaker 712 on the wrist-watch device 704.

A table 714 illustrates other example subconscious gestures and concomitant device functionality invoked in response to the recognition of the performance of a subconscious gesture. For example, in response to the recognition of a choking gesture, a 911 emergency phone call may be placed (e.g., by a mobile phone device). As another example, if a nervous jitter of a user is recognized, soothing music may be played, or the user may be prompted to play an entertaining video game. As yet another example, if a mobile phone device detects a "move phone to ear" gesture, a timer may be initiated. Devices may be wrist-watch devices, mobile phones or other portable devices, or may be incorporated into or serve as a wearable item.

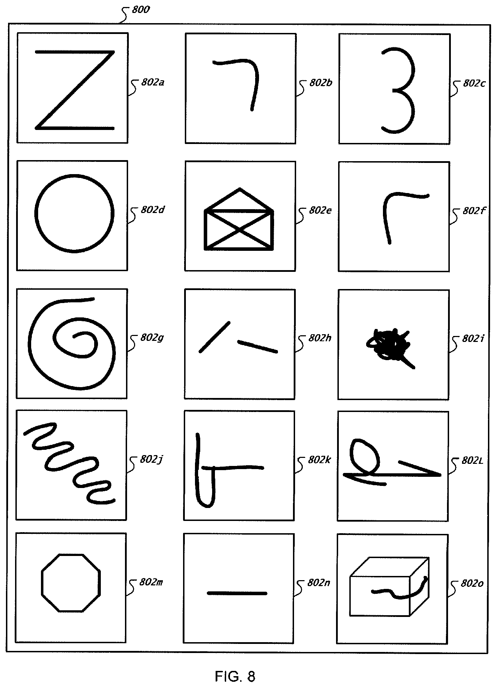

FIG. 8 illustrates an example gesture vocabulary 800. For example, the vocabulary 800 may include example gesture representations 802a-o. Gestures may be alphabetic (e.g., 802a, 802d) or numeric (e.g., 802c) or be other types of symbols. For example, gestures may include wavy or spiral lines (e.g., 802g, 802j). Gestures may be symbols which represent real world items (e.g., the representation 802e represents an envelope and the representation 802m represents an octagon, or stop sign).

Other examples illustrate that a gesture may be generally linear (e.g., 802n) or may be polygonal (e.g., 802d, 802m). Gestures may be formed through connected movements, or the gestures may include disconnected motions or trajectories (e.g., 802h). A gesture may be formed through continuous movement, or may involve discontinuous movement (e.g., 802k, or a gesture (not shown) representing the letter "T"). Gestures may include intersecting lines (e.g., 802e, 802L). Other example gestures are possible, such as three-dimensional gestures (e.g., 802o) and a gesture made up of the tight movements formed from a handshake (e.g., 802i).

Gestures may represent characters used in hand-writing recognition technologies, such as Unistrokes, Quikwriting and Graffiti. Hand-writing recognition technologies may include character definitions which allow a user to write characters without lifting a pen. For example, the representation 802b represents the character "T" in Graffiti, and the representation 802f represents the character "F" in Unistrokes. Gestures may also represent words. For example, the representation 802L may represent the word "the" in Quikwriting.

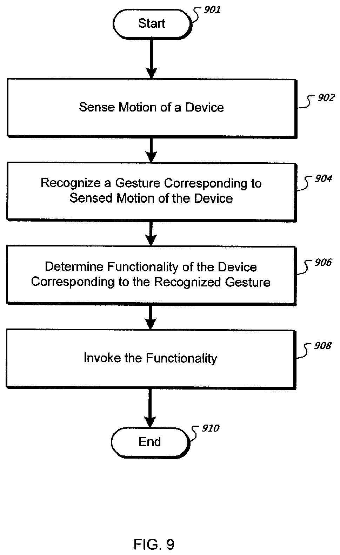

FIG. 9 is a flowchart illustrating a computer-implemented process 900 that effects functionality invocation in response to recognized gestures. Briefly, the computer-implemented process 900 includes sensing motion of a device, recognizing a gesture corresponding to the sensed motion of the device, determining functionality of the device corresponding to the recognize gesture, and invoking the determined functionality.

In further detail, when the process 900 begins (S901), motion of a device is sensed (S902). For example, a sensor may detect motion of the device. The sensor may be any type of component or apparatus configured to detect or sense motion or position of the device. For instance, the sensor may be one or more built-in cameras, one or more gyroscopes, or one or more global positioning system (GPS) trackers. The device may be equipped with any of these devices or a combination of these devices.

A processor may detect motion of the device based on input from the sensor. For example, in implementations in which the device includes a camera, the processor may detect motion of the mobile device by analyzing a sequence or series of images captured by the camera. In this example, the processor may detect motion of the device by performing an optical flow process on images captured by the camera. In implementations in which the device includes a gyroscope, the processor may detect motion of the device by analyzing data provided by the gyroscope. In these implementations, the trajectory of movement may be detected by the processor through the motion vectors produced by the gyroscope. In implementations in which the device includes a GPS tracker or receiver, the processor may detect motion of the device by analyzing data provided by the GPS tracker or receiver. In these implementations, the processor may determine motion vectors by recording and analyzing relative positions of the device throughout a movement.

In some implementations, the device may be equipped with position detection/tracking equipment such as wireless position tracking tools either onset or offset. Any device or apparatus that reveals a unique trajectory according to a unique movement of the device may be used in detecting motion of the device. For example, the motion detected by the processor may be a detected trajectory or pattern of motion of the device.

In response to detecting motion of the device, a gesture corresponding to sensed motion of the device is recognized (S904). A processor may access a vocabulary of gestures. For example, the processor may access data defining a vocabulary of gestures from electronic storage associated with the device. A set of trajectories may be defined as a vocabulary. These gestures may be performed by moving the device in the air to draw the intended trajectory. The intended trajectory or pattern of motion may be detected by the processor as discussed above. The vocabulary of gestures may include data defining motion of the device that corresponds to gestures recognized by the device.

The processor may determine a gesture based on the detected motion of the device and accessed motion data. For example, a number of processes may be used to process input received from the media or sensor to recognize hand gestures, particularly for recognizing hand drawn trajectories. In some implementations, point-matching routines, hidden Markov models, and other pattern recognition processes may be employed to recognize the gestures defined in the vocabulary of gestures.

In determining a gesture, the processor also may reject gestures not defined in the vocabulary. Rejecting gestures may be important because the processor may distinguish motions not intended to be user input commands from motions intended to be user input commands. Rejecting gestures may be based on hidden Markov models (HMMs). For example, an HMM-based rejection method for recognizing hand gestures may be used to reject arbitrary movements.

In some implementations, the processor may compare the detected motion of the device to the motion data included in the vocabulary of gestures. If the processor finds a match, the processor determines that the motion of the device corresponds to the gesture associated with the matched motion data. If the processor does not find a match, the processor continues to compare the detected motion of the device to the motion data associated with other gestures in the vocabulary of gestures until a match is found or the processor determines that the detected motion does not match any of the gestures. The processor may process the detected motion data prior to comparing the detected motion data to the motion data included in the vocabulary of gestures.

Alternatively, the unknown gesture may be compared to all of the models in the vocabulary and a single candidate gesture that is a most likely match may be selected. This rejection approach has been developed to avoid mismatching that could be caused by finding the maximum likelihood only.

Generally, a gesture is intended to refer to a movement, position, pose, or posture that expresses an idea, opinion, emotion, communication, command, demonstration or expression. A user may gesture while holding a handheld device, or the user may gesture using one or more body parts while wearing a device on a part of their body. For instance, the user's gesture may be a single or multiple finger gesture; a single hand gesture; a single hand and arm gesture; a single hand and arm, and body gesture; a bimanual gesture; a head pose or posture; an eye position; a facial expression; a body pose or posture, or any other expressive body state.

A user's gesture may be expressive of an enabling or "engagement" gesture. The engagement gesture may be a specific hand pose or hand motion sequence gesticulated that is held for a predetermined amount of time. One example engagement gesture is the user holding a hand-held device immobile for three seconds. Another example is a circular hand motion made while holding a hand-held device by the user extending their arm in front of their face, and moving their arm in a circle in front of their head. As another example, an engagement gesture may be a user shaking a device. In essence, an engagement gesture specifies to a device the user is ready for further input to occur. To reduce errors, an engagement gesture may be an atypical gesture, such as a gesture that would not subconsciously be made with body language during a normal conversation, or a gesture that would not be made in the ordinary performance of normal human activity.

A gesture may be derived that defines an idea, opinion, emotion, communication, command, demonstration or expression of the user. For instance, the user's gesture may be a single or multiple finger gesture; a single hand gesture; a single hand and arm gesture; a single hand and arm, and body gesture; a bimanual gesture; a change in head pose or posture; a change in an eye position; a change in a facial expression; a movement of a hand while holding a device; a change in a body pose or posture, or a transformation of any other expressive body state.

For brevity, the body part or parts used to perform relevant gestures are generally referred to as a "control object." For instance, the user may express a command using their entire body or with other physical objects, in which case their entire body or the other physical objects may be the control object. A user may more subtly express a command by blinking their eye, by flaring their nostrils, or by wiggling a finger, in which case the eyelid, nose, or finger may be the control object. A control object may also be a physical device, such as an infrared finger light, a mobile device, a wristwatch device, a retro-reflector, or a remote control, to name a few examples.

There are many ways of determining a user's gesture from motion data. For instance, the gesture of "drawing a circle in the air" or "swiping the hand off to one side" may be detected by a gesture analysis and detection process using the hand, arm, body, head or other object position information. Although the gesture may involve a two- or three-dimensional position displacement, such as when a swiping gesture is made, in other instances the gesture includes a transformation without a concomitant position displacement. For instance, if a hand is signaling "stop" with five outstretched fingers and palm forward, the gesture of the user changes if all five fingers are retracted into a ball with the palm remaining forward, even if the overall position of the hand or arm remains static.

Gestures may be detected using heuristic techniques, such as by determining whether hand or device position information passes explicit sets of rules. For example, the gesture of "swiping the hand off to one side" may be identified if the following gesture detection rules are satisfied: (1) the change in horizontal position is greater than a predefined distance over a time span that is less than a predefined limit; (2) the horizontal position changes monotonically over that time span; (3) the change in vertical position is less than a predefined distance over that time span; and (4) the position at the end of the time span is nearer to (or on) a border of the hand detection region than the position at the start of the time span.

Some gestures utilize multiple rule sets that are executed and satisfied in an explicit order, where the satisfaction of a rule set causes a system to change to a state where a different rule set is applied. This system may be unable to detect subtle gestures, in which case Hidden Markov Models may be used, as these models allow for chains of specific motions to be detected, but also consider the overall probability that the motions sufficiently fit a gesture.

So as to enable the input of complex commands and to increase the number of input options, the process for recognizing the user's gesture may further include recognizing a first displacement in a first direction, and recognizing a second displacement in a second direction, and aggregating these multiple displacements as a single gesture. Furthermore, the recognition of the user's gesture may determine a magnitude and direction of the user's gesture.

In response to recognizing a gesture, functionality of the device corresponding to the recognized gesture is determined (S906). For example, a processor may access function data associated with the recognized gesture. For example, the processor may access function data associated with the determined gesture from electronic storage associated with the device. In this example, the function data associated with the determined gesture may be stored in the vocabulary of gestures. For instance, the vocabulary of gestures may include data correlating or associating a recognized gesture with a particular function or user input command. The vocabulary of gestures may be defined such that each gesture is assigned to a function in the device. For example, a gesture that draws a Z in the air may be assigned to an "Open Voice Mailbox" function of a mobile phone device; a gesture that draws a circle may be assigned to a "Redial" function; a gesture that draws half a circle may be assigned to a "Rotate" function that rotates an image or icon displayed on the display of the device, etc.

After functionality has been determined, the functionality is invoked (S908), thereby ending the process 900 (S910). For example, a processor may execute instructions that perform the determined functionality. The function performed by the device may open a voicemail inbox, dial a particular phone number, rotate an image displayed on a display associated with the device, move an icon or object displayed on a display associated with the device, etc.

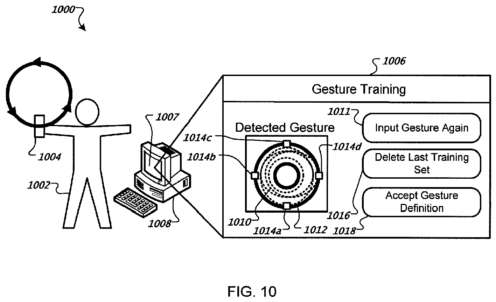

FIG. 10 illustrates an environment 1000 for gesture training. A user 1002 performs a training gesture, in this example moving a device 1004 in a circular motion. The user 1002 may be an end user (i.e., consumer) of the device 1004, customizing the device 1004 for their own use, or the user 1002 may be a test user, training the device 1004 as part of a manufacturer's design and/or development of the device 1004. A manufacturer may use multiple test users to train the device 1004.

A user interface 1006 shown on a display 1007 of a computing device 1008 displays a representation of the performed gesture, along with representations 1010 (shown here as series of dots) of previously performed gestures. The user 1002 may select a button 1011 to input another training gesture. The user 1002 may input as many training gestures as desired. As the user 1002 repeatedly performs training gestures, the computing device 1008 places a boundary 1012 around the representations 1010 of the inputted gestures. The boundary 1012 defines an area of movement which, once defined, may be compared to subsequent user movements to recognize a defined gesture. The user 1002 may move (e.g., select and drag) one or more sizing handles 1014a-d to refine (e.g., change the size, position, orientation of) the boundary 1012.

The user 1002 may select a button 1016 to delete information associated with the most recently inputted training gesture. The user 1002 may select a button 1018 to accept the gesture definition modeled by the accepted inputs. Other user interface elements may be shown, such as a button (not shown) used to cancel the creation of the current gesture definition.

The user interface 1006 may be used to model multiple gestures. The user interface 1006 may be used to define new gesture definitions, and/or may be used to adjust or refine existing or pre-defined gesture definitions. For example, a consumer user may use the user interface 1006 to enlarge the boundaries of a pre-defined gesture.

The computing device 1008 may be a desktop personal computer, a laptop computer, a mobile phone, personal digital assistant (PDA), gaming device, or other device which includes a display. The device 1004 may communicate with the computing device 1008 over one or more wired or wireless networks and/or connections. In some implementations, the device 1004 and the computing device 1008 are the same device (i.e., the user performs a training gesture using the device 1004 and then interacts with the user interface 1006 which is displayed on the device 1004).

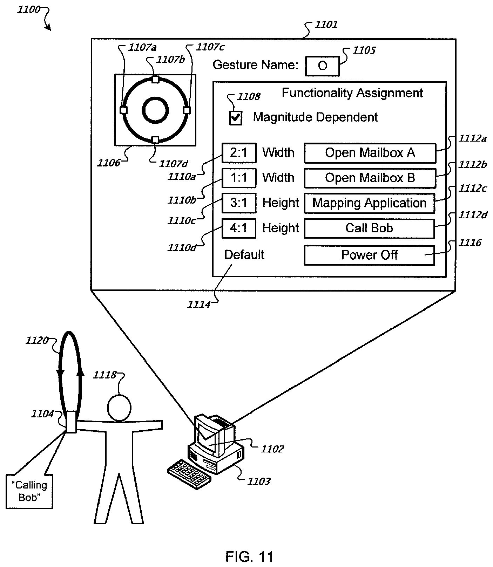

FIG. 11 illustrates an environment 1100 for gesture configuration. The environment 1100 includes a user interface 1101. The user interface 1101 may be displayed, for example, after a gesture has been trained. The user interface 1101 may be launched by an end user (e.g., consumer), or by a test user working on behalf of a manufacturer or an application developer.

The user interface 1101 may be shown on a display 1102 of a computing device 1103. The computing device 1103 may be a desktop personal computer, a laptop computer, a mobile phone, personal digital assistant (PDA), gaming device, or other device which includes a display. The computing device 1103 may communicate with a mobile device 1104 over one or more wired or wireless networks and/or connections. In some implementations, the mobile device 1104 and the computing device 1103 are the same device.

A gesture name 1105 may be entered and/or edited using the user interface 1101. The user may adjust a boundary 1106 of the gesture by dragging and moving one or more sizing handles 1107a-d. Functionality may be assigned to a gesture using the user interface 1101. A check box 1108 may be used to indicate that assigned functionality may be magnitude dependent.

For example, a gesture may be configured such that if a gesture with a 2:1 width ratio 1110a is performed (i.e., a performed gesture's width is 2 times that of a defined normal gesture's width), an "open mailbox A" function 1112a may be invoked. Additionally, the following exemplary configurations may be made: 1) if a gesture with a 1:1 width ratio 1110b is performed, an "open mailbox B" function 1112b may be invoked; 2) if a gesture with a 3:1 height ratio 1110c is performed, a "mapping application" function 1112c may be invoked; and 3) if a gesture with a 4:1 height ratio 1110d is performed, a "call Bob" function 1112d may be invoked. A default case 1114 may be defined, so that if a gesture with a 1:1 width-to-height ratio compared to a defined normal gesture is performed, a default "power off" function 1116 may be invoked.

As an example of gesture configuration, if a user 1118 performs a "tall, skinny" oval-shaped gesture 1120 using the mobile device 1104, the mobile device 1104 may recognize the gesture 1120 and may determine a height ratio of 4:1 by comparing the height of the recognized gesture 1120 to the height of a defined normal gesture. The mobile device 1104 may also determine that the function 1112d ("call Bob") has been assigned to the 4:1 height ratio 1110d, and in response to recognizing the gesture 1120, the "call Bob" function 1112d may be invoked.

Other gesture configurations may be made. For example, functionality assignment may be dependent on factors other than gesture height and width. For instance, functionality assignment may be dependent on gesture speed (e.g., a first function may be configured to be invoked in response to a slowly-performed gesture, and a second function may be configured to be invoked in response to a faster performance of that gesture).

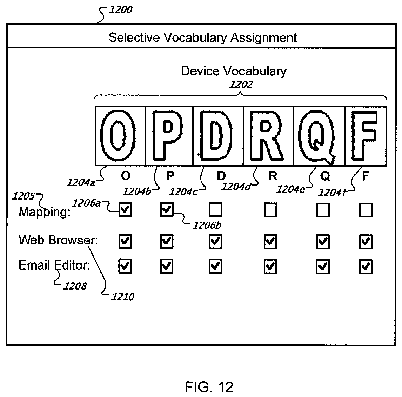

FIG. 12 illustrates a user interface 1200 for selective gesture activation. The user interface 1200 maybe used to selectively activate or deactivate gestures that are included in a device vocabulary. For example, a device vocabulary 1202 includes gestures 1204a-f, representing the characters "O", "P", "D", "R", "Q", and "F", respectively. The gestures 1204a-f may be selectively enabled or activated on a per application basis. For example, the gestures 1204a and 1204b are enabled for a mapping application 1205 (as indicated by checkmarks 1206a and 1206b), while gestures 1204c, 1204d, 1204e, and 1204f are disabled (i.e., deactivated) for the mapping application 1205.

For some applications, such as for the mapping application 1205, one gesture in a set of similarly shaped gestures may be enabled while the other gestures in the set are disabled, to avoid confusion when interpreting and recognizing gestures. For example, the gestures 1204c and 1204e ("D" and "Q" shapes, respectively) may be disabled due to their similarity in shape to the "O" shape of the gesture 1204a. Similarly, the gestures 1204d and 1204f ("R" and "F" shapes, respectively) may be disabled due to their similarity to the "P" shape of the gesture 1204b. As another example, all of the gestures 1204a-f are enabled for an email editor application 1208 and for a web browser application 1210, since for these applications 1208 and 1210, the user may need to enter text (e.g., email message body, web site address), and thus having every character gesture enabled may be desirable. The activation and deactivation of gestures can also be based on manufacturers settings, or based on past confusion between characters.

FIG. 13 is a flowchart illustrating a computer-implemented process 1300 that rejects input gestures based on a determined likelihood and a determined quantity of matched states. Briefly, the computer-implemented process 1300 includes: determining, based on applying an input gesture to hidden Markov models collectively modeling a vocabulary of training gestures, a likelihood that the input gesture matches each training gesture; determining a quantity of states of the input gesture that match corresponding states of a modeled training gesture determined to have a highest likelihood; and rejecting the input gesture if the determined quantity does not satisfy a threshold.

In further detail, when the process 1300 begins (S1301), a likelihood that an input gesture matches each of a set of training gestures is determined (S1302), based on applying the input gesture to hidden Markov models collectively modeling a vocabulary of training gestures.

For example, an individual hidden Markov model may be assigned to each gesture in the set of training gestures. The size of the gestures may be normalized using the mean and standard deviation of each sample both horizontally and vertically during training and recognition phases. By training the HMMs, the parameters of each model may be extracted.

$\lambda_i = (A_i, B_i, \pi_i)$ denotes an example hidden Markov model $\lambda$ assigned to the $i$th gesture where $\pi$ represents the vector of probabilities of being in a particular state at the beginning of a session (e.g., at $t$=1), $A$ represents the state transition matrix, and $B$ represents the observation matrix in which the probabilities of being in a specific state and observing the symbols are given. $V = \{v_1, v_2, ..., v_M\}$ represents the set of possible observation symbols. Therefore, a sample of a gesture in the set of training gestures may be represented by a sequence of observation symbols.

In order to generate an appropriate confidence level, the sequence of state changes may be extracted. If each HMM has N states ($N \geq 2$), for the training sample k of gesture $g$, the sequence of states may be extracted using the Viterbi process, according to Equations (1) and (2):

$$S_{g,k} = \left\{ s_{o_1}, s_{o_2}, \ldots, s_{o_P} \right\} \qquad (1)$$

$$O_{g,k} = \left\{ o_{g,k,1}, o_{g,k,2}, \ldots, o_{g,k,P} \right\} \qquad (2)$$

$$1 \leq g \leq G$$

In Equation 2, $O_{g,k,j}$ represents the $j$th observed symbol in the $k$th training sample of gesture $g$. In Equation (1), the indices $g$ and $k$ have been eliminated for simplicity.

HMMs may be defined in a way such that when leaving a state there is no way to get back to that state in the remainder of processing a given sequence. In these implementations, each state may be met once for a given sequence of observation symbols, regardless of time spent in that state. As such, $\Phi$ may be defined as the set of training samples, reflected in Equation (3), below:

$$\Phi = \left\{ \Omega_1, \Omega_2, \ldots, \Omega_G \right\} \qquad (3)$$

In Equation (3), G represents the number of words (e.g., gestures) in the vocabulary (e.g., $G$=4 in the example described with respect to FIG. 1).

$$\Omega_g = \{O_{g,1}, O_{g,2}, \ldots, O_{g,R}\} \tag{4}$$

Equation (4) represents the set of all training samples for the gesture $g$. A function $f$ may be defined based on the elements of the observation matrices $B_g$.

$$B = \{B_1, B_2, \ldots, B_G\} \tag{5}$$

$$\delta_{g,n,r} = f(B_{g,n}(O_{g,r})) \tag{6}$$

In Equation (6), $B_{g,n}(O_{g,r})$ represents the set of elements of the observation matrix $B$ of gesture $g$ at state $n$ for the $r$th training sample given the set of observations $O_{g,r}$ at that state. The function $f$ may be defined as median or another functionality over the mentioned set. Other definitions of function $f$ may include mean, minimum, maximum, etc. Therefore, in implementations in which function $f$ is defined as median, $\delta_{g,n,r}$ is the median of the elements of the set indicated by $B_{g,n}(O_{g,r})$. A second function h may be defined over the set of $\delta$s for a given word (e.g., a gesture) in the vocabulary:

$$\Delta_{g,n} = \{\delta_{g,n,1}, \delta_{g,n,2}, \ldots, \delta_{g,n,R}\} \tag{7}$$

$$\tau_{g,n} = h(\Delta_{g,n}) \tag{8}$$

In Equation (7), $R$ is the number of training samples for the gesture $g$, and $h$ in Equation (8) is defined to be the minimum of the given set. Other definitions of $h$ also may be used. Given these definitions, $\tau_{g,n}$ represents the minimum of the medians of the elements of observation matrix B of the gesture $g$ at state $n$ extracted using the set of training samples for this gesture. If each HMM has $N$ states:

$$T_g = \{\tau_{g,1}, \tau_{g,2}, \ldots, \tau_{g,N}\} \qquad N \geq 2 \tag{9}$$

The set defined in Equation (9) may be a part of parameters defining a HMM:

$$\Psi_g = (A_g, B_g, \pi_g, T_g) \tag{10}$$

Therefore, for the given input gesture, the trained HMMs are employed to produce a likelihood that the given gesture is one of the trained words in the vocabulary. The HMM that produces the highest likelihood is chosen as the best match. Given a set of trained hidden Markov models, data representing the input gesture may be provided to all the models and the likelihoods that the performed gesture or movement matches any of the trained models may be calculated using the Viterbi process. The model generating the highest probability is the most likely candidate to be a match for the given gesture. This model may be chosen to evaluate the given gesture in order to evaluate how reliably this gesture may be determined to be the same as the gesture represented by the selected model.

Continuing with the process 1300, a quantity of states of the input gesture that match corresponding states of a modeled training gesture determined to have a highest likelihood is determined (S1304).

The set of state changes for the selected HMM may be extracted (see Equation (11)).

$$\Sigma = \{\sigma_1, \sigma_2, \dots\}$$

(11)

$$\delta_{u,n} = f(B_{g,n}(O_u))$$

(12)

In Equation (12), $B_{g,n}(O_u)$ represents the set of elements of the observation matrix $B_g$ at state $n$ for the given set of observation $O_u$ at that state. Function $f$ may have the same functionality as in Equation (6). Given the extracted values for each state, the number of states the given sequence (e.g., gesture) has passed in the found HMM may be counted. The number of states may be counted using an equation defined as follows:

$$c = \sum_{n=1}^{N} z(d(\delta_{u,n}, \tau_{g,n}))$$

(13)

$$z(x) = \begin{cases} 1 & \text{if } x \geq 0 \\ 0 & \text{otherwise} \end{cases}$$

(14)

$$d(x, y) = x - y + \varepsilon, \qquad -1 \leq \varepsilon \leq 1$$

(15)

In Equation (13), $z$ is the unit step function defined in Equation (14), and $\varepsilon$ in Equation (15) is defined as an adjustable value. Assuming $\varepsilon = 0$, c may be interpreted as the number of states for which the extracted median for the given gesture is larger than or equal to the minimum of extracted medians for the set of training samples of the chosen model. Equation (13) counts the states regardless of their sequence.

In other implementations, we may have an alternate definition as follows:

$$q_n = z(d(\delta_{u,n}, \tau_{g,n})) \cdot q_{n-1}, \qquad q_0 = 1$$

(16)

$$c' = \sum_{n=1}^{N} q_n$$

(17)

Equation (17) counts the number of states in the correct order as defined by the HMM.

Continuing with the process 1300, the input gesture is rejected if the determined quantity does not satisfy a threshold (S1306), thereby ending the process 1300 (S1308). For example, based on the number of states a given gesture has passed, $c$ or $c'$ from Equations (13) and (17), a determination may be made as to whether the found model reliably or accurately matches the given input gesture. The threshold may be expressed as a quantity or as a percentage of the total quantity of the corresponding states. The threshold may be configurable, such as by a manufacturer or an application developer.

In some implementations, two adjustable variables of $\varepsilon$ and the acceptable value of $c$ or $c'$ provide the process with the flexibility to accept or reject a gesture based on how close the gesture matches all parts of the most probable trained gesture in the vocabulary. The parameter $\varepsilon$ adjusts the acceptable distance between the median of the observed symbols and the trained median of symbols extracted during the training phase. Setting $\varepsilon$ to zero means that the observed median must be equal or greater than the minimum of the medians observed during training for the given state of the matched HMM.

The value of c or $c'$ represents the number of states that have been determined to have been successfully met. A restrictive criterion may require all the states to be met while a lower value may be acceptable if some flexibility is going to be given to the gestures.

Therefore, $c'$ may be more restrictive than $c$ because $c'$ may require the previous state to have been passed successfully such that an order of states defined by the HMM is taken into account.

An input gesture can be rejected if a sequence of the states of the input gesture does not match a sequence of the corresponding states of the modeled training gesture determined to have the highest likelihood by the corresponding HMM. For example, a user may draw a "2", matching all parts of a modeled training gesture representing a "2", but may draw the "2" backwards, or in a sequence the reverse of the sequence defined in the HMM for the training gesture. The "backwards 2" can be rejected due to the mismatch in state sequence. As another example, a user may create an "8" by drawing or gesturing one circle on top of a second circle, which may match all parts of a training gesture representing an "8", but may not match the sequence defined by the training gesture. As discussed in more detail below, an input gesture may be rejected if a first or last state of the input gesture does not match a first or last of the corresponding states of the modeled training gesture determined to have the highest likelihood.

If an input gesture is rejected as a match for the training gesture with the highest determined likelihood, a second most likely gesture (and possibly additional gestures) can be considered as potential matches before deciding a final rejection of the input gesture. For example, a second modeled training gesture can be determined to have a second highest likelihood. A second quantity of states of the input gesture that match corresponding states of the second modeled training gesture can be determined. The input gesture can be rejected if the determined second quantity fails to satisfy the threshold. For example, if a user gestures an "S" shape, the input gesture can be compared to a highest likelihood training gesture representing an "8", and if the input gesture is determined to not match the "8", the input gesture can be compared to a second highest likelihood training gesture representing a "5".

A person or user may perform a number of gestures on an interactive table where a camera underneath the table's screen images the position of the finger of user and tracks the position to recognize gestures. In some implementations, digits of "0" to "9" and calculation signs of "plus," "minus" and "equal" may be defined as the set of gestures in the vocabulary. An individual 4-state HMM may be assigned to each gesture and may be trained using a particular number of training samples (e.g., thirty), the forward-backward process, and the process discussed above.

The size of the gestures may be normalized using the mean and standard deviation of each sample both horizontally and vertically during training and recognition phases. Using the trained models, a set of forty-six gestures was performed including mainly the gestures that are not defined in the vocabulary. However, a number of gestures defined in the vocabulary also were included in this set in order to examine the accuracy of the process. The gestures may be defined as raw, not-normalized movements of a hand. The raw data may be normalized prior to being sent to the recognition process.

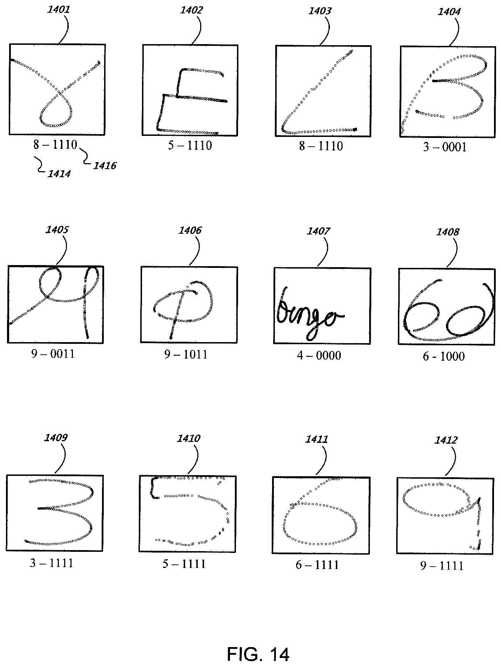

FIG. 14 illustrates example gestures 1401-1412. The first number below each gesture (e.g., the "8" 1414 below gesture 1401) indicates the gesture recognized by the HMMs as the best match, and the second number (e.g., the "1110" 1416 below gesture 1401) is an indication of which of the four states of the gesture met the criteria explained in the exemplary process, expressed a sequence of binary digits. For example, "1011" means the first, third, and fourth states passed but the second state failed. In this example, the parameter ($\varepsilon$) that adjusts the acceptable distance between the median of the observed symbols and the trained median of symbols extracted during the training phase is assumed to be zero ($\varepsilon = 0$).

Gesture 1401 illustrates a gesture that is similar to the digit 8 except for the last state. Using the exemplary process 1300, the first three states meet the criteria of being the gesture for digit 8, but the last state does not meet the defined criteria. The process shows the first three states have passed for gesture 1402, which is recognized as the gesture for digit 5. The gesture 1402 is in some ways similar to the gesture for digit 5, however the end of the gesture 1402 is not similar to the digit 5.

Gesture 1403 is similar to states of the digit 8, except for the last state. Using the exemplary process, the first three states meet the criteria of being the gesture for digit 8, but the last state does not meet the defined criteria. Gesture 1404 is similar to the digit 3 except for the beginning state. Using the exemplary process, the first three states do not meet the criteria of being the gesture for digit 3, but the last state does meet the criteria.

Gestures 1405 and 1406 are both recognized to be most similar to the gesture for the digit 9. However, in gesture 1405, the beginning of the gesture is very different from that of the digit 9. The gesture 1405 passes the third and the fourth states. In gesture 1406, the gesture starts similar to the digit 9, continues in a way dissimilar to the digit 9, and then becomes similar to the gesture for the digit 9 again as it reaches the end of movement. The first, third and fourth states of the gesture 1406 meet the defined criteria, but the second state does not.

Gesture 1407 is not similar to any of the defined gestures, but is recognized as being most similar to the digit 4. Using the exemplary process, none of the states meet the criteria of being the gesture for digit 4. Gesture 1408 is similar to the beginning of the digit 6, but differs from the digit 6 toward the end of the gesture. Using the exemplary process, the first state meets the criteria of being the gesture for the digit 6, but the last three states do not meet the criteria. Gestures 1409 to 1412 illustrate movements similar to defined digit gestures. As shown, for gestures 1409 to 1412, all four states meet the defined criteria.

A threshold can be defined which can be used as a basis for accepting and rejecting a gesture. If a gesture passes at least the number of states defined by the threshold, the gesture can be accepted. If a gesture does not pass at least the number of states defined by the threshold, the gesture can be rejected. For example, if a threshold of 3 is defined, the gestures 1401-1403, 1406, and 1409-1412 can be accepted since those gestures have passed at least 3 states. The gestures 1404, 1405, 1407, and 1408 can be rejected since they have not passed at least 3 states.

Additionally or alternatively, a gesture can be rejected if it does not pass a begin and/or an end state. For example, gestures 1401-1403, even though they have passed 3 states and have passed the first state, may be rejected because they have not passed the end state. As another example, the gesture 1404 may be rejected because, although a portion of the gesture looks like a '3', the gesture has not passed the first state.

As described above and as shown in FIG. 15, a user 1502 can make a gesture 1504 in the air using a device 1506. A user may also make gestures using various other approaches. For example, a user may make a gesture 1508 on a tablet computer 1510 using a finger or a stylus. A user 1512 may also make a gesture 1514 on a touch screen 1516, such as if the touch screen 1516 is included in a kiosk 1518. As another example, a user 1520 may make a gesture 1522 on an interactive table 1524, where the gesture 1522 is recognized by a camera 1526 which may be positioned underneath the table 1524.

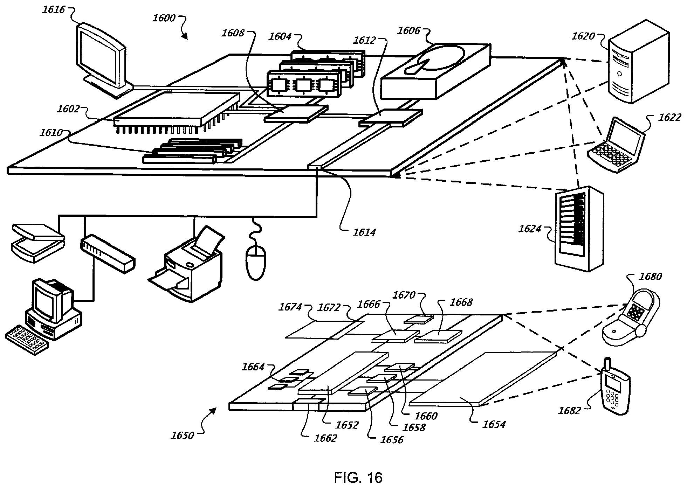

FIG. 16 is a block diagram of computing devices 1600, 1650 that may be used to implement the systems, methods and processes described herein, as either a client or as a server or plurality of servers. Computing device 1600 is intended to represent various forms of digital computers, such as laptops, desktops, workstations, personal digital assistants, servers, blade servers, mainframes, and other appropriate computers. Computing device 1650 is intended to represent various forms of mobile devices, such as personal digital assistants, cellular telephones, smartphones, and other similar computing devices. The components shown here, their connections and relationships, and their functions, are meant to be exemplary only, and are not meant to limit implementations described and/or claimed in this document.

Computing device 1600 includes a processor 1602, memory 1604, a storage device 1606, a high-speed interface 1608 connecting to memory 1604 and high-speed expansion ports 1610, and a low speed interface 1612 connecting to low speed bus 1614 and storage device 1606. Each of the components 1602, 1604, 1606, 1608, 1610, and 1612, are interconnected using various busses, and may be mounted on a common motherboard or in other manners as appropriate. The processor 1602 may process instructions for execution within the computing device 1600, including instructions stored in the memory 1604 or on the storage device 1606 to display graphical information for a GUI on an external input/output device, such as display 1616 coupled to high speed interface 1608. In other implementations, multiple processors and/or multiple buses may be used, as appropriate, along with multiple memories and types of memory. Also, multiple computing devices 1600 may be connected, with each device providing portions of the necessary operations (e.g., as a server bank, a group of blade servers, or a multi-processor system).

The memory 1604 stores information within the computing device 1600. In one implementation, the memory 1604 is a computer-readable medium. In one implementation, the memory 1604 is a volatile memory unit or units. In another implementation, the memory 1604 is a non-volatile memory unit or units.

The storage device 1606 is capable of providing mass storage for the computing device 1600. In one implementation, the storage device 1606 is a computer-readable medium. In various different implementations, the storage device 1606 may be a floppy disk device, a hard disk device, an optical disk device, or a tape device, a flash memory or other similar solid state memory device, or an array of devices, including devices in a storage area network or other configurations. In one implementation, a computer program product is tangibly embodied in an information carrier. The computer program product contains instructions that, when executed, perform one or more methods, such as those described above. The information carrier is a computer- or machine-readable medium, such as the memory 1604, the storage device 1606, memory on processor 1602, or a propagated signal.

The high speed controller 1608 manages bandwidth-intensive operations for the computing device 1600, while the low speed controller 1612 manages lower bandwidth-intensive operations. Such allocation of duties is exemplary only. In one implementation, the high-speed controller 1608 is coupled to memory 1604, display 1616 (e.g., through a graphics processor or accelerator), and to high-speed expansion ports 1610, which may accept various expansion cards (not shown). In the implementation, low-speed controller 1612 is coupled to storage device 1606 and low-speed expansion port 1614. The low-speed expansion port, which may include various communication ports (e.g., USB, Bluetooth, Ethernet, wireless Ethernet) may be coupled to one or more input/output devices, such as a keyboard, a pointing device, a scanner, or a networking device such as a switch or router, e.g., through a network adapter.

The computing device 1600 may be implemented in a number of different forms, as shown in the figure. For example, it may be implemented as a standard server 1620, or multiple times in a group of such servers. It may also be implemented as part of a rack server system 1624. In addition, it may be implemented in a personal computer such as a laptop computer 1622. Alternatively, components from computing device 1600 may be combined with other components in a mobile device (not shown), such as device 1650. Each of such devices may contain one or more of computing device 1600, 1650, and an entire system may be made up of multiple computing devices 1600, 1650 communicating with each other. The computing device 1600 may include one or more sensors (not shown), such as gyroscopes, cameras or GPS (Global Positioning Satellite) trackers, configured to detect or sense motion or position of the computing device 1600.

Computing device 1650 includes a processor 1652, memory 1664, an input/output device such as a display 1654, a communication interface 1666, and a transceiver 1668, among other components. The device 1650 may also be provided with a storage device, such as a microdrive or other device, to provide additional storage. Each of the components 1650, 1652, 1664, 1654, 1666, and 1668, are interconnected using various buses, and several of the components may be mounted on a common motherboard or in other manners as appropriate. The computing device 1650 may include one or more sensors (not shown), such as gyroscopes, cameras or GPS (Global Positioning Satellite) trackers, configured to detect or sense motion or position of the computing device 1600.

The processor 1652 may process instructions for execution within the computing device 1650, including instructions stored in the memory 1664. The processor may also include separate analog and digital processors. The processor may provide, for example, for coordination of the other components of the device 1650, such as control of user interfaces, applications run by device 1650, and wireless communication by device 1650.

Processor 1652 may communicate with a user through control interface 1658 and display interface 1656 coupled to a display 1654. The display 1654 may be, for example, a TFT LCD display or an OLED display, or other appropriate display technology. The display interface 1656 may comprise appropriate circuitry for driving the display 1654 to present graphical and other information to a user. The control interface 1658 may receive commands from a user and convert them for submission to the processor 1652. In addition, an external interface 1662 may be provide in communication with processor 1652, so as to enable near area communication of device 1650 with other devices. External interface 1662 may provide, for example, for wired communication (e.g., via a docking procedure) or for wireless communication (e.g., via Bluetooth or other such technologies).

The memory 1664 stores information within the computing device 1650. In one implementation, the memory 1664 is a computer-readable medium. In one implementation, the memory 1664 is a volatile memory unit or units. In another implementation, the memory 1664 is a non-volatile memory unit or units. Expansion memory 1674 may also be provided and connected to device 1650 through expansion interface 1672, which may include, for example, a SIMM card interface. Such expansion memory 1674 may provide extra storage space for device 1650, or may also store applications or other information for device 1650. Specifically, expansion memory 1674 may include instructions to carry out or supplement the processes described above, and may include secure information also. Thus, for example, expansion memory 1674 may be provide as a security module for device 1650, and may be programmed with instructions that permit secure use of device 1650. In addition, secure applications may be provided via the SIMM cards, along with additional information, such as placing identifying information on the SIMM card in a non-hackable manner.

The memory may include for example, flash memory and/or MRAM memory, as discussed below. In one implementation, a computer program product is tangibly embodied in an information carrier. The computer program product contains instructions that, when executed, perform one or more methods, such as those described above. The information carrier is a computer- or machine-readable medium, such as the memory 1664, expansion memory 1674, memory on processor 1652, or a propagated signal.

Device 1650 may communicate wirelessly through communication interface 1666, which may include digital signal processing circuitry where necessary. Communication interface 1666 may provide for communications under various modes or protocols, such as GSM voice calls, SMS, EMS, or MMS messaging, CDMA, TDMA, PDC, WCDMA, CDMA2000, or GPRS, among others. Such communication may occur, for example, through radio-frequency transceiver 1668. In addition, short-range communication may occur, such as using a Bluetooth, WiFi, or other such transceiver (not shown). In addition, GPS receiver module 1670 may provide additional wireless data to device 1650, which may be used as appropriate by applications running on device 1650.

Device 1650 may also communication audibly using audio codec 1660, which may receive spoken information from a user and convert it to usable digital information. Audio codex 1660 may likewise generate audible sound for a user, such as through a speaker, e.g., in a handset of device 1650. Such sound may include sound from voice telephone calls, may include recorded sound (e.g., voice messages, music files, etc.) and may also include sound generated by applications operating on device 1650.

The computing device 1650 may be implemented in a number of different forms, as shown in the figure. For example, it may be implemented as a cellular telephone 1680. It may also be implemented as part of a smartphone 1682, personal digital assistant, or other similar mobile device.

Various implementations of the systems and techniques described here may be realized in digital electronic circuitry, integrated circuitry, specially designed ASICs (application specific integrated circuits), computer hardware, firmware, software, and/or combinations thereof. These various implementations may include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and may be implemented in a high-level procedural and/or object-oriented programming language, and/or in assembly/machine language. As used herein, the terms "machine-readable medium" "computer-readable medium" refers to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here may be implemented on a computer having a display device (e.g., a CRT (cathode ray tube) or LCD (liquid crystal display) monitor) for displaying information to the user and a keyboard and a pointing device (e.g., a mouse or a trackball) by which the user may provide input to the computer. Other kinds of devices may be used to provide for interaction with a user as well; for example, feedback provided to the user may be any form of sensory feedback (e.g., visual feedback, auditory feedback, or tactile feedback); and input from the user may be received in any form, including acoustic, speech, or tactile input.

The systems and techniques described here may be implemented in a computing system that includes a back-end component (e.g., as a data server), or that includes a middleware component (e.g., an application server), or that includes a front-end component (e.g., a client computer having a graphical user interface or a Web browser through which a user may interact with an implementation of the systems and techniques described here), or any combination of such back-end, middleware, or front-end components. The components of the system may be interconnected by any form or medium of digital data communication (e.g., a communication network). Examples of communication networks include a local area network ("LAN"), a wide area network ("WAN"), and the Internet.

The computing system may include clients and servers. A client and server are generally remote from each other and typically interact through a communication network. The relationship of client and server arises by virtue of computer programs running on the respective computers and having a client-server relationship to each other.

A number of implementations have been described. Nevertheless, it will be understood that various modifications may be made.

**Claims**

1. A computer-implemented method comprising:

   determining, based on applying an input gesture to hidden Markov models collectively modeling a vocabulary of training gestures, wherein each hidden Markov model includes a set of states and state transitions, wherein the states correspond to gesture portions:

   a likelihood that the input gesture matches each training gesture (1302) and
   a quantity of states (1304) of the input gesture that match corresponding states of a modeled training gesture determined to have a highest likelihood; and rejecting the input gesture (1306) if the determined quantity does not satisfy a threshold.

2. The method of claim 1, further comprising recognizing the input gesture if the determined quantity satisfies the threshold.

3. The method of claim 2, further comprising controlling an application based on the recognized input gesture.

4. The method of claim 2, further comprising determining an input command associated with the modeled training gesture determined to have the highest likelihood if the determined quantity satisfies the threshold quantity.

**5.** The method of claim 1, further comprising:

determining a second quantity of states of the rejected input gesture that match corresponding states of a second modeled training gesture determined to have a second highest likelihood; and
rejecting the rejected input gesture if the determined second quantity fails to satisfy the threshold.

**6.** The method of claim 1, further comprising:

applying observation symbols defining the input gesture to the Hidden Markov Models.

**7.** The method of claim 1, further comprising:

rejecting the input gesture if a sequence of the states of the input gesture does not match a sequence of the corresponding states of the modeled training gesture determined to have the highest likelihood.

**8.** The method of claim 1, wherein the likelihood and a sequence of state changes are determined using the Viterbi algorithm.

**9.** The method of claim 1, wherein, if the determined quantity fails to satisfy the threshold, the input gesture is rejected as being outside of the vocabulary.

**10.** The method of claim 1, further comprising:

training the hidden Markov models to recognize the vocabulary of training gestures.

**11.** The method of claim 1, further comprising:

extracting a set of state changes associated with the input gesture,
wherein the quantity of states of the input gesture are determined from the extracted set of state changes.

**12.** The method of claim 1, wherein determining the quantity of states of the input gesture that match corresponding states of the modeled training gesture determined to have the highest likelihood further comprises:

determining the quantity of states for which an extracted median for the input gesture in each state is greater than or equal to a minimum of extracted medians in a corresponding state for a set of training samples of the modeled training gesture determined to have the highest likelihood.

**13.** The method of claim 1, wherein determining the quantity of states of the input gesture that match corresponding states of the modeled training gesture determined to have the highest likelihood further comprises:

determining the quantity of states for which an extracted median for the input gesture in each state is greater or equal, by a non-zero adjustment parameter $\varepsilon$, to a minimum of extracted medians in a corresponding state for a set of training samples of the modeled training gesture determined to have the highest likelihood.

**14.** A device comprising a processor configured to:

determine, based on applying an input gesture to hidden Markov models collectively modeling a vocabulary of training gestures, wherein each hidden Markov model includes a set of states and state transitions, wherein the states correspond to gesture portions:

a likelihood that the input gesture matches each training gesture, and
a quantity of states of the input gesture that match corresponding states of a modeled training gesture determined to have a highest likelihood; and

reject the input gesture if the determined quantity fails to satisfy a threshold.

**15.** A computer-readable medium encoded with a computer program comprising instructions that, when executed, operate to cause a computer to perform operations comprising:

determining, based on applying an input gesture to hidden Markov models collectively modeling a vocabulary of training gestures, wherein each hidden Markov model includes a set of states and state transitions, wherein the states correspond to gesture portions:

a likelihood that the input gesture matches each training gesture, and
a quantity of states of the input gesture that match corresponding states of a modeled training gesture determined to have a highest likelihood; and

rejecting the input gesture if the determined quantity fails to satisfy a threshold.

**Patentansprüche**

1. Computerimplementiertes Verfahren, das Folgendes beinhaltet:

   Bestimmen, auf der Basis der Anwendung einer Eingabegeste auf Hidden-Markov-Modelle, die kollektiv ein Vokabular von Trainingsgesten modellieren, wobei jedes Hidden-Markov-Modell einen Satz von Zuständen und Zustandsübergängen beinhaltet, wobei die Zustände Gestenteilen entsprechen:

   einer Wahrscheinlichkeit, dass die Eingangsgeste mit jeder Trainingsgeste (1302) übereinstimmt, und einer Menge an Zuständen (1304) der Eingangsgeste, die mit entsprechenden Zuständen einer modellierten Trainingsgeste übereinstimmen, von denen festgestellt wird, dass sie eine höchste Wahrscheinlichkeit haben; und
   Zurückweisen der Eingabegeste (1306), wenn die vorbestimmte Menge eine Schwelle nicht erfüllt.

2. Verfahren nach Anspruch 1, das ferner das Erkennen der Eingabegeste beinhaltet, wenn die vorbestimmte Menge die Schwelle erfüllt.

3. Verfahren nach Anspruch 2, das ferner das Steuern einer Anwendung auf der Basis der erkannten Eingabegeste beinhaltet.

4. Verfahren nach Anspruch 2, das ferner das Bestimmen eines Eingabebefehls beinhaltet, assoziiert mit der modellierten Trainingsgeste, von der festgestellt wurde, dass sie die höchste Wahrscheinlichkeit hat, wenn die vorbestimmte Menge die Schwellenmenge erfüllt.

5. Verfahren nach Anspruch 1, das ferner Folgendes beinhaltet:

   Bestimmen einer zweiten Menge an Zuständen der zurückgewiesenen Eingabegeste, die mit entsprechenden Zuständen einer zweiten modellierten Trainingsgeste übereinstimmen, von der festgestellt wird, dass sie eine zweithöchste Wahrscheinlichkeit hat; und
   Zurückweisen der zurückgewiesenen Eingabegeste, wenn die bestimmte zweite Menge die Schwelle nicht erfüllt.

6. Verfahren nach Anspruch 1, das ferner Folgendes beinhaltet:

   Anwenden von Beobachtungssymbolen, die die Eingabegeste definieren, auf die Hidden-Markov-Modelle.

7. Verfahren nach Anspruch 1, das ferner Folgendes beinhaltet:

   Zurückweisen der Eingabegeste, wenn eine Sequenz der Zustände der Eingabegeste nicht mit einer Sequenz der entsprechenden Zustände der modellierten Trainingsgeste übereinstimmt, von der festgestellt wurde, dass sie die höchste Wahrscheinlichkeit hat.

8. Verfahren nach Anspruch 1, wobei die Wahrscheinlichkeit und eine Sequenz von Zustandsänderungen mit dem Viterbi-Algorithmus bestimmt werden.

9. Verfahren nach Anspruch 1, wobei die Eingabegeste, wenn die vorbestimmte Menge die Schwelle nicht erfüllt, als nicht in das Vokabular fallend zurückgewiesen wird.

**10.** Verfahren nach Anspruch 1, das ferner Folgendes beinhaltet:

Trainieren der Hidden-Markov-Modelle, so dass sie das Vokabular von Trainingsgesten erkennen.

**11.** Verfahren nach Anspruch 1, das ferner Folgendes beinhaltet:

Extrahieren eines Satzes von mit der Eingabegeste assoziierten Zustandsänderungen,
wobei die Menge an Zuständen der Eingabegeste anhand des extrahierten Satzes von Zustandsänderungen bestimmt wird.

**12.** Verfahren nach Anspruch 1, wobei das Bestimmen der Menge an Zuständen der Eingabegeste, die mit entsprechenden Zuständen der modellierten Trainingsgeste übereinstimmen, von denen festgestellt wird, dass sie die höchste Wahrscheinlichkeit haben, ferner Folgendes beinhaltet:

Bestimmen der Menge an Zuständen, für die ein extrahiertes Median für die Eingabegeste in jedem Zustand gleich oder größer ist als ein Minimum von extrahierten Medianen in einem entsprechenden Zustand für einen Satz von Trainingsproben der modellierten Trainingsgeste, von der festgestellt wird, dass sie die höchste Wahrscheinlichkeit hat.

**13.** Verfahren nach Anspruch 1, wobei das Bestimmen der Menge an Zuständen der Eingabegeste, die mit entsprechenden Zuständen der modellierten Trainingsgeste übereinstimmen, von denen bestimmt wird, dass sie die höchste Wahrscheinlichkeit haben, ferner Folgendes beinhaltet:

Bestimmen der Menge an Zuständen, für die ein extrahiertes Median für die Eingabegeste in jedem Zustand gleich oder größer, nach einem Justierungsparameter $\varepsilon$ von ungleich null, als ein Minimum von extrahierten Medianen in einem entsprechenden Zustand für einen Satz von Trainingsproben der modellierten Trainingsgeste ist, von der festgestellt wird, dass sie die höchste Wahrscheinlichkeit hat.

**14.** Gerät, das einen Prozessor umfasst, der konfiguriert ist zum:

Feststellen, auf der Basis der Anwendung einer Eingabegeste auf Hidden-Markov-Modelle, die kollektiv ein Vokabular von Trainingsgesten modellieren, wobei jedes Hidden-Markov-Modell einen Satz von Zuständen und Zustandsübergängen beinhaltet, wobei die Zustände Gestenteilen entsprechen:

einer Wahrscheinlichkeit, dass die Eingabegeste mit einer Trainingsgeste übereinstimmt, und
einer Menge an Zuständen der Eingabegeste, die mit entsprechenden Zuständen der modellierten Trainingsgeste übereinstimmen, von denen festgestellt wird, dass sie eine höchste Wahrscheinlichkeit haben; und

Zurückweisen der Eingabegeste, wenn die vorbestimmte Menge eine Schwelle nicht erfüllt.

**15.** Computerlesbares Medium, auf dem ein Computerprogramm mit Befehlen codiert ist, die bei Ausführung bewirken, dass ein Computer Operationen durchführt, die Folgende umfassen:

Feststellen, auf der Basis der Anwendung einer Eingabegeste auf Hidden-Markov-Modelle, die kollektiv ein Vokabular von Trainingsgesten modellieren, wobei jedes Hidden-Markov-Modell einen Satz von Zuständen und Zustandsübergängen beinhaltet, wobei die Zustände Gestenteilen entsprechen:

einer Wahrscheinlichkeit, dass die Eingabegeste mit einer Trainingsgeste übereinstimmt, und
einer Menge an Zuständen der Eingabegeste, die mit entsprechenden Zuständen der modellierten Trainingsgeste übereinstimmen, von der festgestellt wird, dass sie eine höchste Wahrscheinlichkeit haben; und

Zurückweisen der Eingabegeste, wenn die vorbestimmte Menge eine Schwelle nicht erfüllt.

**Revendications**

**1.** Procédé mis en oeuvre par ordinateur comprenant :

la détermination, en fonction de l'application d'un geste d'entrée à des modèles de Markov cachés modélisant collectivement un vocabulaire de gestes d'apprentissage, dans lequel chaque modèle de Markov caché comporte un ensemble d'états et de transitions d'état, dans lequel les états correspondent à des parties de geste :

d'une probabilité que le geste d'entrée correspond à chaque geste d'apprentissage (1302), et
d'une quantité d'états (1304) du geste d'entrée qui correspondent à des états correspondants d'un geste d'apprentissage modélisé déterminé comme ayant une plus haute probabilité ; et

du rejet du geste d'entrée (1306) si la quantité déterminée ne satisfait pas un seuil.

2. Procédé selon la revendication 1, comprenant en outre la reconnaissance du geste d'entrée si la quantité déterminée satisfait le seuil.

3. Procédé selon la revendication 2, comprenant en outre la commande d'une application en fonction du geste d'entrée reconnu.

4. Procédé selon la revendication 2, comprenant en outre la détermination d'une commande d'entrée associée au geste d'apprentissage modélisé déterminé comme ayant la plus haute probabilité si la quantité déterminée satisfait la quantité de seuil.

5. Procédé selon la revendication 1, comprenant en outre :

la détermination d'une seconde quantité d'états du geste d'entrée rejeté qui correspondent à des états correspondants d'un second geste d'apprentissage modélisé déterminé comme ayant une seconde plus haute probabilité ; et
le rejet du geste d'entrée rejeté si la seconde quantité déterminée ne satisfait pas le seuil.

6. Procédé selon la revendication 1, comprenant en outre :

l'application de symboles d'observation définissant le geste d'entrée aux modèles de Markov cachés.

7. Procédé selon la revendication 1, comprenant en outre :

le rejet du geste d'entrée si une séquence des états du geste d'entrée ne correspond pas à une séquence des états correspondants du geste d'apprentissage modélisé déterminé comme ayant la plus haute probabilité.

8. Procédé selon la revendication 1, dans lequel la probabilité d'une séquence de changements d'état est déterminée en utilisant un algorithme de Viterbi.

9. Procédé selon la revendication 1, dans lequel, si la quantité déterminée ne satisfait pas le seuil, le geste d'entrée est rejeté comme étant en dehors du vocabulaire.

10. Procédé selon la revendication 1, comprenant en outre :

l'apprentissage des modèles de Markov cachés pour reconnaître le vocabulaire de gestes d'apprentissage.

11. Procédé selon la revendication 1, comprenant en outre :

l'extraction d'un ensemble de changements d'état associé au geste d'entrée,
dans lequel la quantité d'états du geste d'entrée est déterminée à partir de l'ensemble extrait de changements d'état.

12. Procédé selon la revendication 1, dans lequel la détermination de la quantité d'états du geste d'entrée qui correspondent à des états correspondants du geste d'apprentissage modélisé déterminé comme ayant la plus haute probabilité comprend en outre :

la détermination de la quantité d'états pour laquelle une moyenne extraite pour le geste d'entrée dans chaque état est supérieure ou égale à un minimum de moyennes extraites dans un état correspondant pour un ensemble d'échantillons d'apprentissage du geste d'apprentissage modélisé déterminé comme ayant la plus haute probabilité.

**13.** Procédé selon la revendication 1, dans lequel la détermination de la quantité d'états du geste d'entrée qui correspondent à des états correspondants du geste d'apprentissage modélisé déterminé comme ayant la plus haute probabilité comprend en outre :

la détermination de la quantité d'états pour laquelle une moyenne extraite pour le geste d'entrée dans chaque état est supérieure ou égale, par un paramètre d'ajustement non nul $\varepsilon$, à un minimum de moyennes extraites dans un état correspondant pour un ensemble d'échantillons d'apprentissage du geste d'apprentissage modélisé déterminé comme ayant la plus haute probabilité.

**14.** Dispositif comprenant un processeur configuré pour :

déterminer, en fonction de l'application d'un geste d'entrée à des modèles de Markov cachés modélisant collectivement un vocabulaire de gestes d'apprentissage, dans lequel chaque modèle de Markov caché comporte un ensemble d'états et de transitions d'état, dans lequel les états correspondent à des parties de geste :

d'une probabilité que le geste d'entrée correspond à chaque geste d'apprentissage et
d'une quantité d'états du geste d'entrée qui correspondent à des états correspondants d'un geste d'apprentissage modélisé déterminé comme ayant une plus haute probabilité ; et

du rejet du geste d'entrée si la quantité déterminée ne satisfait pas un seuil.

**15.** Support lisible par ordinateur codé avec un programme informatique comprenant des instructions qui, à leur exécution, amènent un ordinateur à mettre en oeuvre des opérations comprenant :

la détermination, en fonction de l'application d'un geste d'entrée à des modèles de Markov cachés modélisant collectivement un vocabulaire de gestes d'apprentissage, dans lequel chaque modèle de Markov caché comporte un ensemble d'états et de transitions d'état, dans lequel les états correspondent à des parties de geste :

d'une probabilité que le geste d'entrée correspond à chaque geste d'apprentissage, et
d'une quantité d'états du geste d'entrée qui correspondent à des états correspondants d'un geste d'apprentissage modélisé déterminé comme ayant une plus haute probabilité ; et

du rejet du geste d'entrée si la quantité déterminée ne satisfait pas un seuil.

FIG. 1

FIG. 2

FIG. 3

FIG. 4

| Height | Width |
|--------|-------|
| 2 | 1 |

| Height | Width |
|--------|-------|
| 2 | 2 |

| Height | Width |
|--------|-------|
| 1 | 1 |

| Height | Width |
|--------|-------|
| 1 | 2 |

510

506

504

508

| Height | Width |
|--------|-------|
| 1 | 1 |

502

511

**"O" Gesture**

| Ratio | Function |
|-------|----------|
| 2:1 | Call Bob |
| 2:2 | Read Mail |
| 1:1 | Power Off |
| 1:2 | Volume Down |

512a 514a
512b 514b
512c 514c
512d 514d

519

| Ratio | Variable |
|-------|----------|
| 2:1 | Variable A |
| 2:2 | Variable B |
| 1:1 | Variable C |
| 1:2 | Variable D |

520a 522a
520b 522b
520c 522c
520d 522d

**"RUN PROGRAM Y %VARIABLE_X"**

516    518

529

| Ratio | Vert. Factor | Horz. Factor |
|-------|--------------|--------------|
| 2:1 | 100% 532a | 0% 534a |
| 2:2 | 100% 532b | 100% 534b |
| 1:2 | 0% 532c | 100% 534c |

530a
530b
530c

**"ADJUST-AUDIO** 524
**TREBLE=%Vert_Factor** 526
**BASE=%Horz_Factor"**

528

FIG. 5

FIG. 6

710 ⌐ Hi,
my name
is Bob.

708

704

702 ⌐ 705 706

704

712

705

710 ⌐ Hi, my name is Bob.

714

| Gesture | Functionality |
|---|---|
| Handshake | Record Sound Snippet |
| Choking | Call 911 |
| Nervous Jitter | Play Game |
| Phone to Ear | Begin Timer |

FIG. 7

FIG. 8

Start — 901

Sense Motion of a Device — 902

Recognize a Gesture Corresponding to
Sensed Motion of the Device — 904

Determine Functionality of the Device
Corresponding to the Recognized Gesture — 906

Invoke the Functionality — 908

End — 910

FIG. 9

FIG. 10

FIG. 11

FIG. 12

Start — 1301

Determine, Based on Applying an Input Gesture to Hidden Markov Models Collectively Modeling a Vocabulary of Training Gestures, a Likelihood That the Input Gesture Matches Each Training Gesture — 1302

Determine a Quantity of States of the Input Gesture That Match Corresponding States of a Modeled Training Gesture Determined to Have a Highest Likelihood — 1304

Reject the Input Gesture if the Determined Quantity Does Not Satisfy a Threshold — 1306

End — 1308

FIG. 13

FIG. 14

FIG. 15

FIG. 16

**EP 2 191 397 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A-YOUN PARK et al.** Continuous Whole Body Action Sequences Using Discrete Hidden Markov Models. Hidden Markov Model, 2006, 978-3, 540-32624, 3